# EUROPEAN PATENT APPLICATION

(11) **EP 3 447 638 A1**
(43) Date of publication of application: **27.02.2019**
(21) Application number: 16902462.7
(22) Date of filing: 20.05.2016
(51) Int. Cl.: G06F 9/44

(54) **TEMPLATE GENERATING DEVICE, TEMPLATE GENERATING PROGRAM, AND TEMPLATE GENERATING METHOD**

(71) Applicant: Mitsubishi Electric Corporation, Chiyoda-ku Tokyo 100-8310 (JP)
(72) Inventor: MIYAUCHI, Nobuhito, Tokyo 100-8310 (JP)
(74) Representative: Pfenning, Meinig & Partner mbB
(86) International application number: PCT/JP2016/065093
(87) International publication number: WO 2017/199443

(57) **Abstract**

A first extraction unit (910) divides a requirement specification (51), an external specification (52) and an internal specification (53) into a plurality of areas, and extracts a keyword from respective areas. A second extraction unit (920) creates a function list for each object from source code comprised of a plurality of areas, and extracts a keyword from the function list. By using the keyword extracted, the creation unit (930) creates, for each product, association information indicating correspondence among a total of four areas of areas respectively of the source code (54), the internal specification (53), the external specification (52) and the requirement specification (51). A determination unit (940) judges whether a plurality of similar area groups exist, in a plurality of products, the plurality of similar area groups being area groups comprised of four areas indicated by the association information, and the area groups similar to one another, of which products are different.

## Description

### Technical Field

The present invention relates to a template creation apparatus to create templates respectively for a requirement specification, an external design document, an internal design document and source code in software development process.

### Background Art

Conventionally, there has been no commercial that supports specification creation of a similar product, and in a case of creating a specification of a similar product, the specification of the similar product has been created generally by copying and pasting existent specifications, and by partially revising changed portions.

### Citation List

### Patent Literature

Patent Literature 1: JP H07-129381 A
Patent Literature 2: JP 2010-204910 A

In Patent Literature 1, a design specification is automatically created from source code by using existent analysis software such as Doxygen, etc. However, the design specification only corresponds to an external design document or the like, and a requirement specification or an external design specification cannot be created automatically.

Further, in Patent Literature 2, while source code is being browsed, a design specification to be used as a reference is displayed; however, this technique is only limited to display, and is not a technique to automatically create a template of a design specification or source code.

### Summary of Invention

### Technical Problem

The present invention is aimed at providing an apparatus to create templates respectively for a requirement specification, an external design document, an external design document and source code of products to be newly developed from requirement specifications, external design documents, external design documents and source codes of a plurality of existent products.

### Solution to Problem

A template creation apparatus according to one aspect of the present invention includes:
a first extraction unit to divide a requirement specification, an external specification and an internal specification of one product all being electronic data into a plurality of areas, and to extract a keyword from each of the plurality of areas;
a second extraction unit to create a function list for each object from source code being electronic data of the one product comprised of a plurality of areas being a plurality of description areas, and to extract a keyword from the function list;
a creation unit to create, for each product, association information indicating correspondence among four areas of an area of the source code, an area of the internal specification, an area of the external specification and an area of the requirement specification, by using the keyword extracted; and
a determination unit to judge whether a plurality of similar area groups exist, in a plurality of products, the plurality of similar area groups being area groups comprised of four areas for which the correspondence is indicated by the association information, and being the area groups similar to one another, of which products are different, and if the plurality of similar area groups exist, to determine whether to adopt four areas of any of the plurality of similar area groups as templates respectively of a requirement specification, an external specification, an internal specification and source code.

### Advantageous Effects of Invention

According to a template creation apparatus in the present invention, a document to be used as a basis like a sample document is automatically created. Thus, even when a designer participating in a development project is not proficient in the design technique of the developing product, it is possible to provide a common sample document to be used as a basis. Accordingly, it is possible to create a specification efficiently.

### Brief Description of Drawings

Fig. 1 is a diagram of a first embodiment, and is a configuration diagram of a template creation apparatus;
Fig. 2 is a diagram of the first embodiment, and is a diagram illustrating processing steps of the template creation apparatus;
Fig. 3 is a diagram of the first embodiment, and is a configuration diagram of a former process 1A of the template creation apparatus;
Fig. 4 is a diagram of the first embodiment, and is a configuration diagram of the former process 1A of the template creation apparatus;
Fig. 5 is a diagram of the first embodiment, and is a configuration diagram of a latter process 1B of the template creation apparatus;
Fig. 6 is a diagram of the first embodiment, and is a diagram illustrating an outline of operation of the template creation apparatus;
Fig. 7 is a diagram of the fist embodiment, and is a diagram illustrating relation between similar area groups and the number of products;
Fig. 8 is a diagram of the first embodiment, and is a flowchart illustrating operation of the former process 1A;
Fig. 9 is a diagram of the first embodiment, and is a flowchart illustrating operation of the latter process 1B;
Fig. 10 is a diagram of the first embodiment, and is a diagram illustrating an example of a structure of contents of the specification of Open Embedded Library 2.0 (OpenEL 2.0) corresponding to an external specification;
Fig. 11 is a diagram of the first embodiment, and is a diagram illustrating a processing flow of the former process 1A;
Fig. 12 is a diagram of the first embodiment, and is a flowchart describing keyword extraction in the former process 1A;
Fig. 13 is a diagram of the first embodiment, and is the diagram indicating information of an API specification extracted from source code 54 by a source code analysis unit 21;
Fig. 14 is a diagram of the first embodiment, and is the diagram indicating keywords of respective text areas in an external specification 52;
Fig. 15 is a diagram of the first embodiment, and is the diagram indicating keywords of respective text areas in a requirement specification 51;
Fig. 16 is a diagram of the first embodiment, and is the diagram indicating keywords of respective text areas in an internal specification 53;
Fig. 17 is a diagram of the first embodiment, and is the diagram indicating API names included in the source code 54;
Fig. 18 is a diagram of the first embodiment, and is the diagram indicating API names included in the internal specification 53;
Fig. 19 is a diagram of the first embodiment, and is the diagram illustrating correspondence between areas of the source code 54 and areas of the internal specification 53;
Fig. 20 is a diagram of the first embodiment, and is the diagram illustrating correspondence between the areas of the internal specification 53 and areas of the external specification 52;
Fig. 21 is a diagram of the first embodiment, and is the diagram illustrating correspondence between the areas of the external specification 52 and areas of the requirement specification 51;
Fig. 22 is a diagram of the first embodiment, and is the diagram illustrating a processing flow of the latter process 1B;
Fig. 23 is a diagram of the first embodiment, and is the diagram illustrating association information;
Fig. 24 is a diagram of the first embodiment, and is the diagram illustrating an example of a template for the requirement specification 51;
Fig. 25 is a diagram of the first embodiment, and is the diagram illustrating an example of a template for the external specification 52;
Fig. 26 is a diagram of the first embodiment, and is the diagram illustrating an example of a template for the internal specification 53;
Fig. 27 is a diagram of the first embodiment, and is the diagram illustrating an example of a template for the source code 54;
Fig. 28 is a diagram of the first embodiment, and is the diagram illustrating a sample wherein keywords which have been extracted as main keywords of respective text areas are indicated in tabular form;
Fig. 29 is a diagram of the first embodiment, and is the diagram illustrating a process to extract objects and functions common in the latter process;
Fig. 30 is a diagram of the first embodiment, and is the diagram illustrating a hardware configuration of a template creation apparatus;
Fig. 31 is a diagram of a second embodiment, and is the diagram indicating a table of contents of a requirement specification 51-2;
Fig. 32 is a diagram of the second embodiment, and is the diagram indicating the table of contents of the requirement specification 51-2 continuing from Fig. 31;
Fig. 33 is a diagram of the second embodiment, and is the diagram indicating a proposed structure of a simplified table of contents of the external specification 52;
Fig. 34 is a diagram of the second embodiment, and is the diagram indicating main keywords extracted from the requirement specification 51-2;
Fig. 35 is a diagram of the second embodiment, and is the diagram indicating a processing result by a first correspondence extraction unit 31a;
Fig. 36 is a diagram of a third embodiment, and is the diagram indicating a list of Web APIs corresponding to the external specification 52;
Fig. 37 is a diagram of the third embodiment, and is the diagram indicating a list of source code files of the Web APIs;
Fig. 38 is a diagram of the third embodiment, and is the diagram indicating main items of a table of contents of a basic design document.

### Description of Embodiments

### First Embodiment

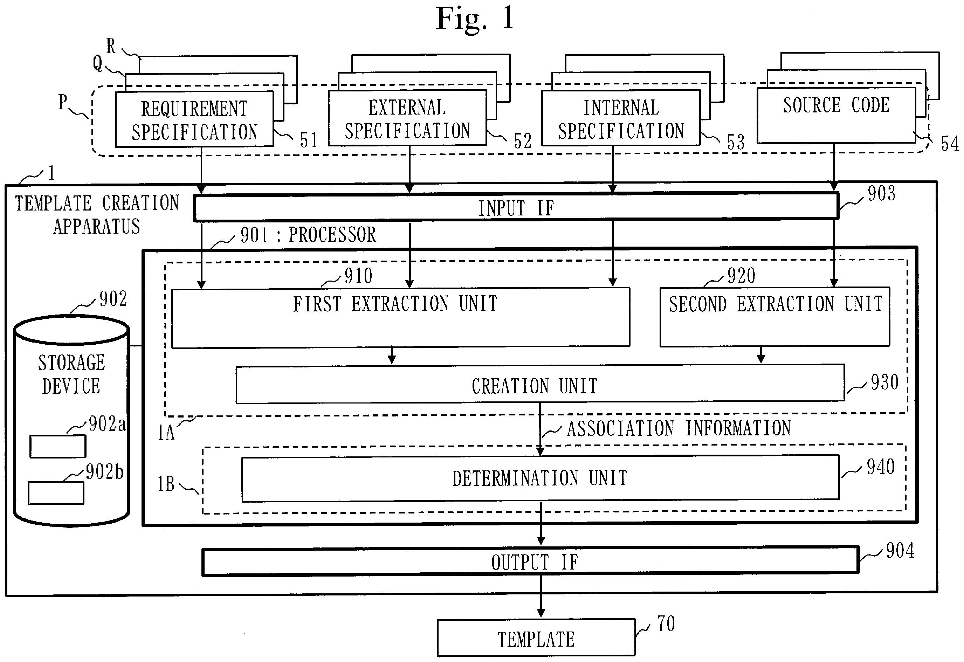

With reference to Fig. 1 through Fig. 30, a template creation apparatus 1 of a first embodiment will be described. The template creation apparatus 1 of the first embodiment is characterized in that the template creation apparatus 1 analyzes source code, and extracts text areas of a design document corresponding to respective objects and functions. The template creation apparatus 1 tries expansion to corresponding text areas to the upstream side of design, from an internal specification to an external specification and a requirement specification.
(1) The internal specification may be also called an internal design document or a detailed design document, etc.; meanwhile, it is indicated as an internal specification in the present embodiment.
(2) The external specification may be also called an external design document or a schematic design document, etc.; meanwhile, it is indicated as an external specification in the present embodiment.

As a use condition of the template creation apparatus 1, a requirement specification, an external specification, an internal specification and source code are supposed to include structures of table of contents such as chapters and sections, etc., in one or more products. The requirement specification, the external specification, the internal specification and the source code are product design data.

### <***Explanation of Configuration***>

A configuration of the template creation apparatus 1 of the first embodiment will be described using Fig. 1 through Fig. 5.

Fig. 1 illustrates a configuration of the template creation apparatus 1. The template creation apparatus 1 is a computer. The template creation apparatus 1 is equipped with hardware components such as a processor 901, a storage device 902, an input interface 903, an output interface 904, etc. The input interface 903 is indicated as the input IF 903, and the output interface 904 is indicated as the output IF 904. The template creation apparatus 1 includes a first extraction unit 910, a second extraction unit 920, a creation unit 930 and a determination unit 940, as constitutive functions.

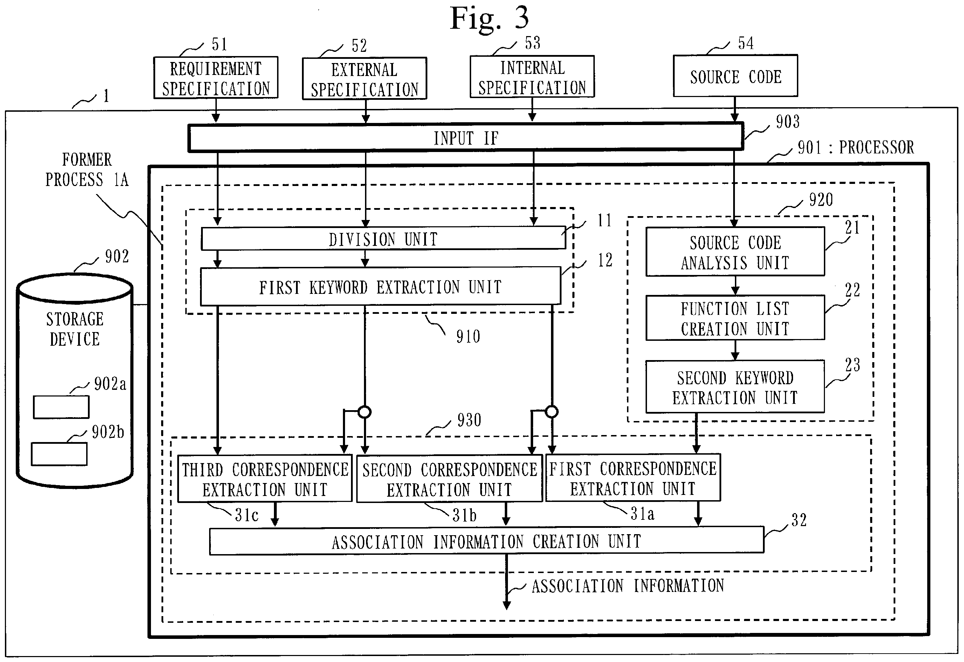

In the following explanation, the functional capabilities of the first extraction unit 910, the second extraction unit 920, the creation unit 930 and the determination unit 940 in the template creation apparatus 1 are referred to as functional capabilities of "units" of the template creation apparatus 1. The functional capabilities of the "units" of the template creation apparatus 1 are realized by software. The first extraction unit 910 and the second extraction unit 920, etc. are further composed of a plurality of function units, as illustrated in Fig. 3 through Fig. 5 to be described below. More specific function units to form the first extraction unit 910, etc. will be described later.

The storage device 902 includes an auxiliary storage device 902a and a memory 902b. The auxiliary storage device 902a is, specifically, a read only memory (ROM), a flash memory or a hard disk drive (HDD). The memory 902b is, specifically, a random access memory (RAM).

The input IF 903 is a port into which signals are input. Further, the input IF 903 may be a port that is connected to an input device such as a mouse, a keyboard, or a touch panel. The input IF 903 is, specifically, a universal serial bus (USB) terminal. The input IF 903 may be a port to which a local area network (LAN) is connected.

The output IF 904 is a port from which signals are output. The output IF 904 may be a USB terminal.

Programs to realize the functional capabilities of the "units" indicated as the processor 901 are stored in the auxiliary storage device 902a. The programs are loaded into the memory 902b, read into the processor 901, and executed by the processor 901. The auxiliary storage device 902a also stores an operating system (OS). At least a part of the OS is loaded into the memory 902b, and the processor 901 executes the programs to realize the functional capabilities of the "units" indicated as the processor 901 while executing the OS.

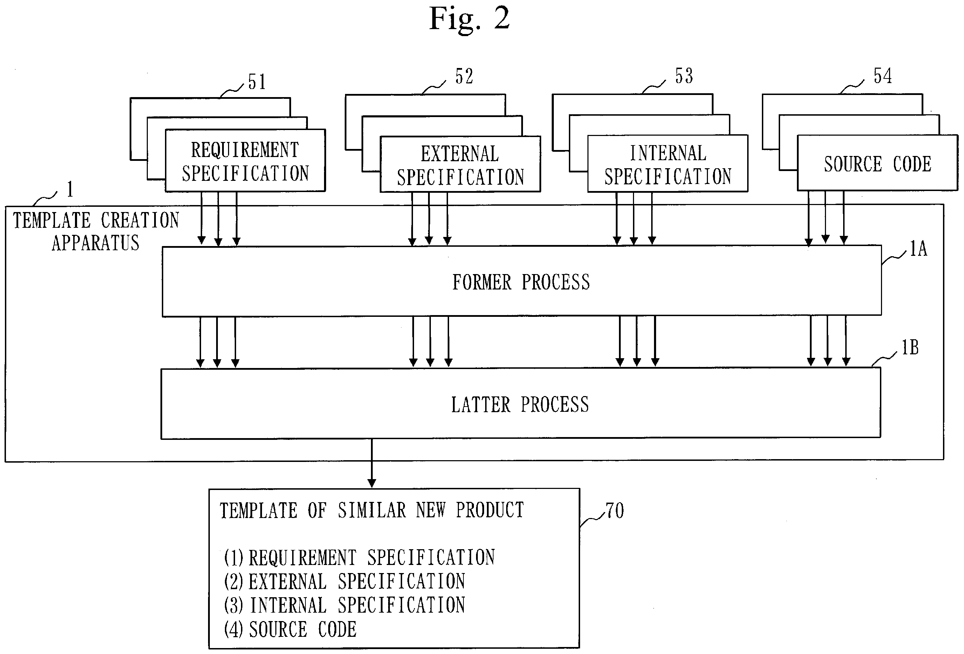

Fig. 2 is a functional block diagram illustrating processing of the template creation apparatus 1. The template creation apparatus 1 performs a former process 1A and a latter process 1B, and creates a template group 70. The former process 1A is performed by the first extraction unit 910, the second extraction unit 920 and the creation unit 930. The latter process 1B is performed by the determination unit 940. The execution result of the former process 1A is input to the latter process 1B, and the latter process 1B outputs the template group 70. The template group 70 is a template for a requirement specification, a template for an external specification, a template for an internal specification, and a template for source code.

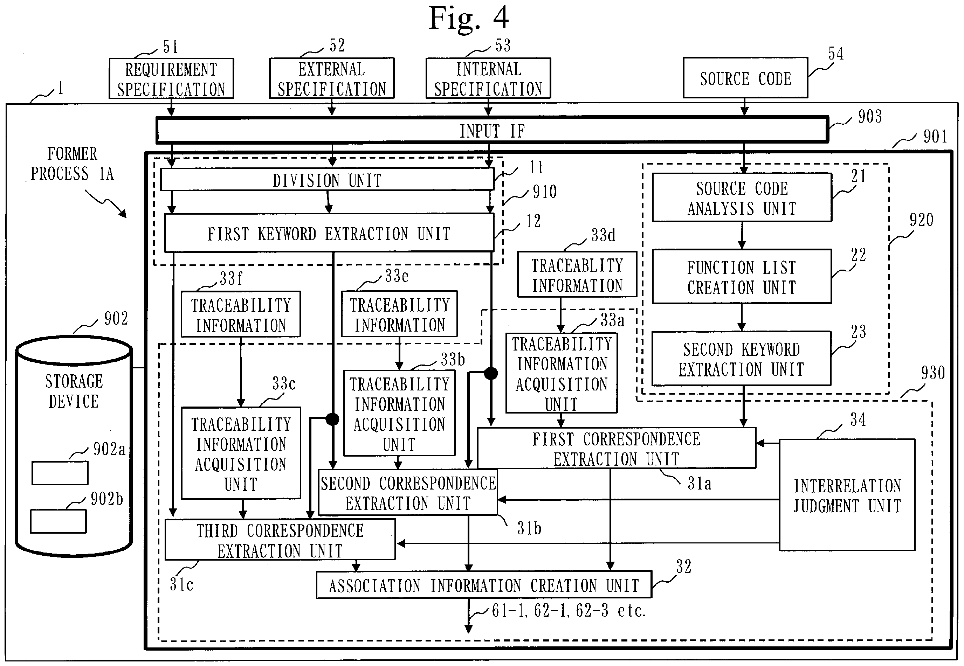

(1) In the former process 1A, a requirement specification 51, an external specification 52, an internal specification 53 and source code 54 of a product P are first input to the template creation apparatus 1, and the template creation apparatus 1 performs the former process 1A for the product P.
(2) Next, a requirement specification 51, an external specification 52, an internal specification 53 and source code 54 of a product Q are input, and the template creation apparatus 1 performs the former process 1A for the product Q.
(3) Likewise, requirement specifications 51, external specifications 52, internal specifications 53 and source code 54 of a product R, a product S, and so on are input, and the template creation apparatus 1 performs the former process 1A for the product Q, the product S, and so on. The specific contents of the former process 1A will be described with respect to Fig. 3 and Fig. 4. It is supposed that requirement specifications 51, external specifications 52, internal specifications 53 and source code 54 of two and more products are input to the former process 1A.

In the latter process 1B, association information 61 of the product P, association information 62 of the product Q and association information 63 of the product R being execution results by the former process 1A are input. The "association information" will be described below.

Fig. 3 illustrates function units of the template creation apparatus 1 to perform the former process 1A of the template creation apparatus 1.
(1) The first extraction unit 910 includes a division unit 11 and a first keyword extraction unit 12.
(2) The second extraction unit 920 includes a source code analysis unit 21, a function list creation unit 22 and a second keyword extraction unit 23.
(3) The creation unit 930 includes a first correspondence extraction unit 31a, a second correspondence extraction unit 31b, a third correspondence extraction unit 31c and an association information creation unit 32.

In Fig. 4, the creation unit 930 further includes traceability information acquisition units 33a, 33b and 33c, and an interrelation judgment unit 34. Fig. 4 is different from Fig. 3 in that the traceability information acquisition units 33a, 33b and 33c, and the interrelation judgment unit 34 are added to the creation unit 930 in Fig. 4.

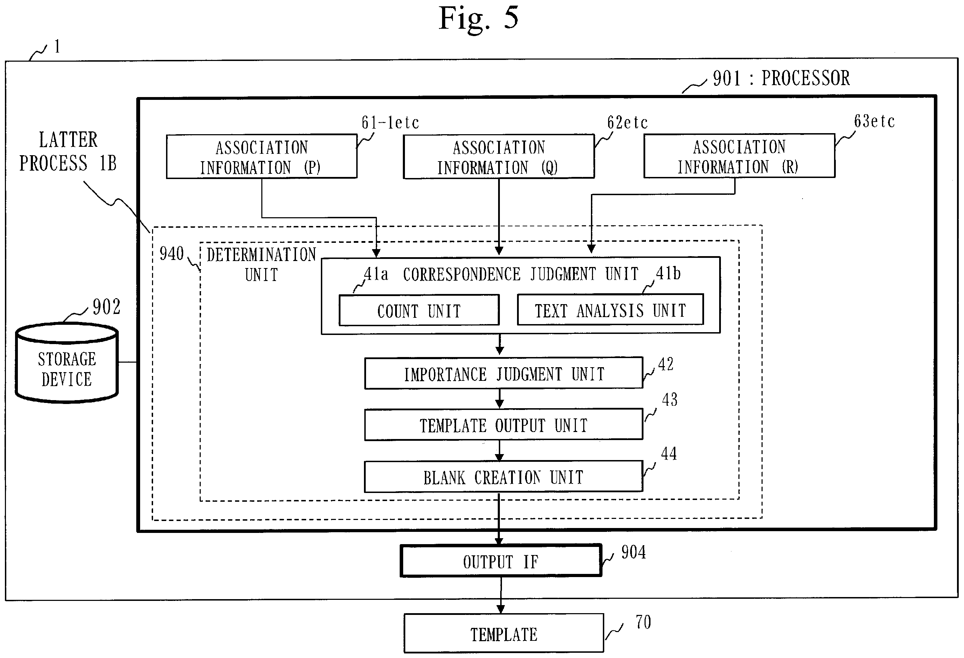

Fig. 5 indicates the functional capabilities of the "units" of the template creation apparatus 1 to perform the latter process 1B of the template creation apparatus 1. The determination unit 940 includes a correspondence judgment unit 41, a count unit 41a, a text analysis unit 41b, an importance judgment unit 42, a template output unit 43 and a blank creation unit 44.

### ***Explanation of Operation***

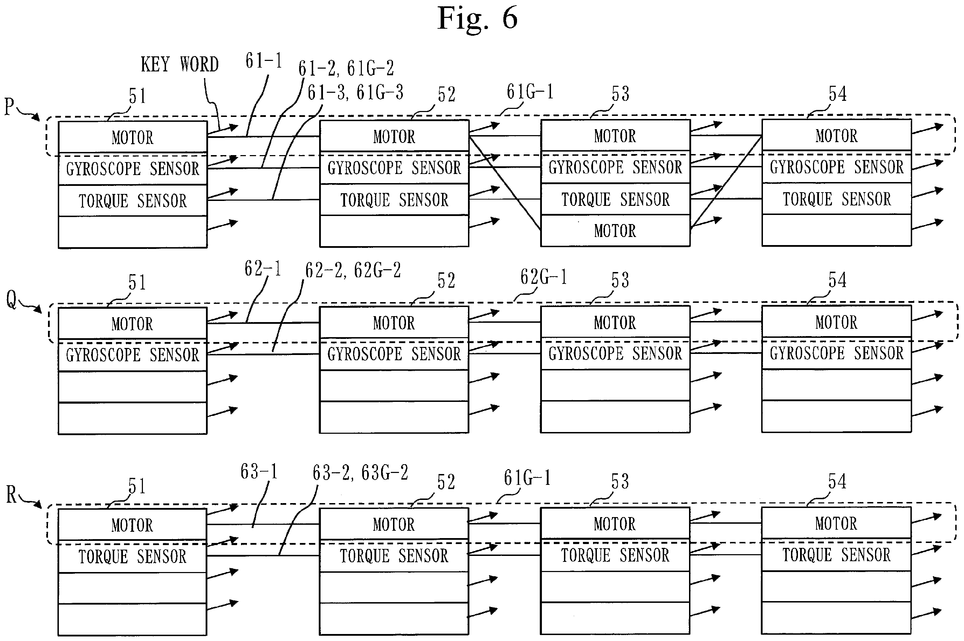

An outline of the operation of the template creation apparatus 1 will be described with reference to Fig. 1 and Fig. 6.

Fig. 6 is a diagram for describing the outline of the operation of the template creation apparatus 1.

In the template creation apparatus 1, the requirement specification 51, the external specification, the internal specification 53 and the source code 54 of the product P are input from the input interface 903. First, the template creation apparatus 1 performs the former process 1A for the product P. The requirement specification 51, the external specification 52, the internal specification 53 and the source code 54 input from the input interface 903 are all electronic data. The first extraction unit 910 divides a requirement specification 51, an external specification 52 and an internal specification 53 of one product into a plurality of areas, and extracts keywords from respective areas. Fig. 6 illustrates the requirement specifications 51, the external specifications 52, the internal specifications 53 and the source code 54 of the products P, Q and R. The upper column corresponds to the product P, the middle column corresponds to the product Q, and the lower column corresponds to the product R. Hereinafter, Fig. 6 will be described with respect to the product P; however, the same is true for the other products.

Four stages are stacked in the requirement specification 51, the external specification 52 and the internal specification 53. This indicates that the first extraction unit 910 divides the requirement specification 51 and so on into a plurality of areas (four areas). Further, arrows respectively in four stages indicate keywords to be extracted. The same is true for the other products. It is indicated that, regarding the requirement specification 51, the first extraction unit 910 extracts as keywords "motor" from the areas in the first stage (the uppermost stage), "gyroscope sensor" from the areas in the second stage, and "torque sensor" from the areas in the third stage.

The second extraction unit 920 creates function lists for respective objects from the source code 54 composed of a plurality of areas being a plurality of description areas, and extracts keywords from the function lists. The function lists (to be described below) are not illustrated in Fig. 6. Fig. 6 indicates that "motor", "gyroscope sensor", and "torque sensor" are extracted as keywords from the function lists, and these keywords exist in the areas in the first stage, the areas in the second stage and the areas in the third stage in the source code 54.

The creation unit 930 creates "association information" indicating correspondence among four areas of an area of the source code 54, an area of the internal specification 53, an area of the external specification 52 and an area of the requirement specification 51 for respective products, by using the keywords extracted. In Fig. 6, the creation unit 930 creates "association information 61-1" indicating correspondence among four areas of the area in the first stage of the source code 54, the area in the first stage of the internal specification 53, the area in the first stage of the external specification 52 and the area in the first stage of the requirement specification 51, by using "motor" as the keyword extracted. That is, since the keyword "motor" is the same, the creation unit 930 associates each of the first stages of the source code 54, the internal specification 53, the external specification 52 and the requirement specification 51 as "association information 61-1".

Similarly, by using "gyroscope sensor" as the keyword extracted, the creation unit 930 creates "association information 61-2" indicating correspondence among four areas of the area in the second stage of the source code 54, the area in the second stage of the internal specification 53, the second stage of the area of the external specification 52, and the area in the second stage of the requirement specification 51. Similarly, by using "torque sensor" as the keyword extracted, the creation unit 930 creates "association information 61-3" indicating correspondence among four areas of the area in the third stage of the source code 54, the area in the third stage of the internal specification 53, the area in the third stage of the external specification 52, and the area in the third stage of the requirement specification 51.

Here, it is supposed that "torque sensor" is not extracted from the product Q as the keyword, and "gyroscope sensor" is not extracted from the product R as the keyword.

The first extraction unit 910, the second extraction unit 920 and the creation unit 930 perform the former process 1A, and the former process 1A is performed for each product. Meanwhile, the determination unit 940 performs the latter process 1B, and the latter process 1B is performed targeting a plurality of products.

The determination unit 940 judges whether a plurality of similar area groups exist, wherein the plurality of similar area groups are area groups comprised of four areas for which correspondence is indicated in association information, and the area groups are similar to one another, of different products. When the plurality of similar area groups exist, the determination unit 940 determines whether to adopt four areas of any of the similar area groups as respective templates of a requirement specification 51, an external specification 52, an internal specification 53 and source code 54.

Specifically, the process is as follows. The determination unit 940 judges whether a plurality of similar area groups being area groups comprised of four areas for which correspondence is indicated in the "association information 61-1", and so on, and the area groups being similar to one another, of different products exist in the products P, Q and R. A concrete example will be discussed. The "association information 61-1" associates the areas in the respective first stages of the source code 54, the internal specification 53, the external specification 52 and the requirement specification 51. The "area group" is a group of areas comprised of a total of four areas consisting of one area of the source code 54, one area of the internal specification 53, one area of the external specification 52 and one area of the requirement specification 51, for which the correspondence is indicated in the "association information 61-1". Fig. 6 illustrates an area group 61G-1 as an area group indicated by the "association information 61-1". In a case of the product Q, an area group indicated by the "association information 62-1" is an area group 62G-1.

The determination unit 940 judges whether the area group 61G-1 and the area group 62G-1 being area groups of different products are similar to each other. A method to judge similarity will be described below. When the similar area groups exist, the determination unit 940 determines whether to adopt four areas of any of the similar area groups as respective templates of the requirement specification 51, the external specification 52, the internal specification 53 and the source code 54. The determination method will be described below.

When association information is created, the creation unit 930 associates the area of the source code 54 with the area of the internal specification 53 by using the keyword extracted.

Next, by using the keyword extracted, the creation unit 930 associates the area of the internal specification 53 which is associated with the area of the source code 54, with the area of the external specification 52.

Next, by using the keyword extracted, the creation unit 930 associates the area of the external specification 52 which is associated with the area of the source code 54 via the area of the internal specification 53, with the area of the requirement specification 51.

As stated above, the creation unit 930 associates four areas consisting of the area of the source code 54, the area of the internal specification 53, the area of the external specification 52 and the area of the requirement specification 51. That is, in the case of Fig. 6, the creation unit 930 first associates the area in the first stage of the source code 54 with the area in the first stage of the internal specification 53, by using "motor" as the keyword extracted.

Next, by using "motor", the creation unit 930 associates the area in the first stage of the internal specification 53 which is associated with the area in the first stage of the source code 54, with the area of the external specification 52.

Next, by using "motor", the creation unit 930 associates the area in the first stage of the external specification 52 which is associated with the area in the first stage of the source code 54 via the area in the first stage of the internal specification 53, with the area of the requirement specification 51.

As stated above, the creation unit 930 associates the areas in the first stages respectively of the source code 54, the internal specification 53, the external specification 52 and the requirement specification 51, and creates the association information 61-1.

The determination unit 940 judges whether similar area groups exist by using an "extraction keyword" being a keyword included in area groups of respective products, and the keyword which is extracted by the first extraction unit 910 and the second extraction unit 920. That is, in the case of Fig. 6, the determination unit 940 judges whether the area group 61G-1 is similar to the area group 62G-1 by "motor" extracted by the first extraction unit 910. In this case, the determination unit 940 judges whether similar area groups exist by using appearance frequency of the same "extraction keyword".

Specifically, the process is as follows. In Fig. 6, "motor" is extracted as the keyword from the first stages respectively of the requirement specification 51 and so on, in the area groups 61G-1 and 62G-1; however, it is here assumed that "motor, gyroscope sensor" are extracted from the respective first stages.

In this case, when "motor" is extracted more than "gyroscope sensor," e.g., in a ratio of 9 to 1, from the respective first stages of the area groups 61G-1 and 62G-1, the determination unit 940 judges that the area groups 61G-1 and 62G-1 are similar area groups being similar to each other with a feature point of "motor". Meanwhile, when "motor" is extracted large in number in a ratio of 9 to 1 from the respective first stages of the area group 61G-1, and "gyroscope sensor" is extracted large in number in a ratio of 9 to 1 from the respective first stages of the area group 62G-1, the determination unit 940 judges that the area groups 61G-1 and 62G-1 are not similar area groups.

In the above, whether similar area groups exist is judged by "extraction keywords"; however, summaries may be used as follows. The determination unit 940 creates summaries of at least any one of the area of the internal specification 53, the area of the external specification 52 and the area of the requirement specification 51 in the area group, and by comparing summaries between the area groups of different products, judges whether similar area groups exist or not.

The determination unit 940 determines adopting four areas of any of the similar area groups as respective templates of the requirement specification, the external specification, the internal specification and the source code, based on the number of products for which the similar area groups, being similar to one another and having the same feature point, exist.

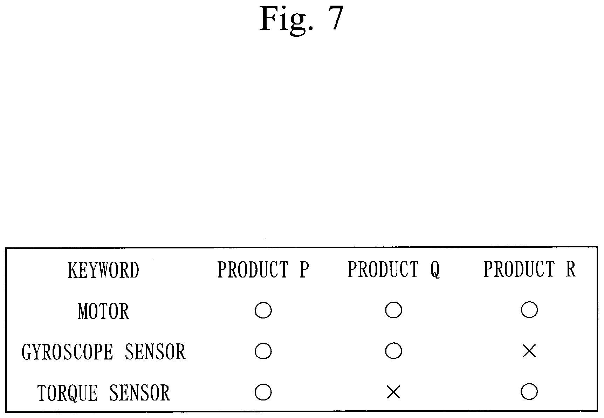

Fig. 7 is a diagram illustrating the number of the products for which similar area groups exist in Fig. 6. In Fig. 6, the area group 61G-1, the area group 62G-1 and the area group 63G-1 having the same keyword "motor" are assumed to be similar area groups being similar to one another having "motor" as the feature point. Further, the area group 61G-2 and the area group 62G-2 having the same keyword "gyroscope sensor" are assumed to be similar area groups, being similar to each other and having "gyroscope sensor" as the feature point. Furthermore, the area group 61G-3 and the area group 63G-2 having the same keyword "torque sensor" are assumed to be similar area groups, being similar to each other and having "torque sensor" as the feature point.

In this case, the number of the products for which similar area groups being similar to one another, with the same feature point, exist is the number of circles in Fig. 7. The determination unit 940 determines adopting four areas of any of the similar area groups as respective templates of the requirement specification, the external specification, the internal specification and the source code, based on the number of the products for which the similar area groups similar to one another, with the same feature point, exist. The number of the products with the feature point "motor" is three, the number of the products with the feature point "gyroscope sensor" is two, and the number of products with the feature point "torque sensor" is two. The determination unit 940 selects the similar area groups with the feature point "motor", for example. In this case, the respective area groups 61G-1, 62G-1 and 63G-1 are similar area groups. In this example, the determination unit 940 may determine any area groups for template creation. It is assumed that the determination unit 940 determines the area group 61G-1 for template creation. In this case, the determination unit 940 adopts the areas in the respective first stages of the source code 54, the internal specification 53, the external specification 52 and the requirement specification 51 included in the area group 61G-1 as respective templates of the source code, the internal specification, the external specification and the requirement specification.

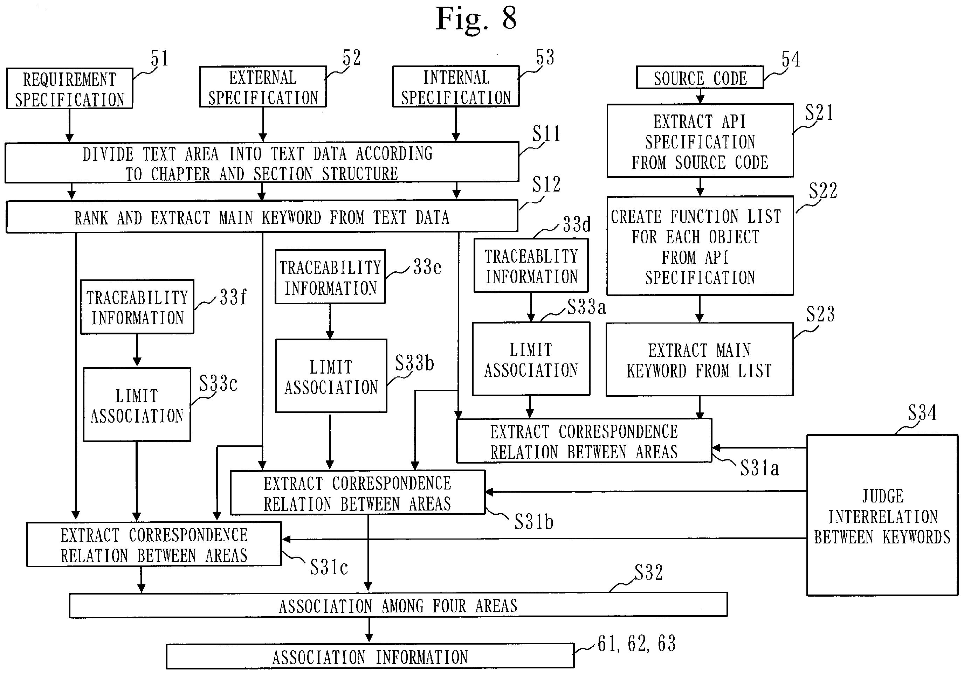

Fig. 8 is a flowchart illustrating operation of the former process 1A.

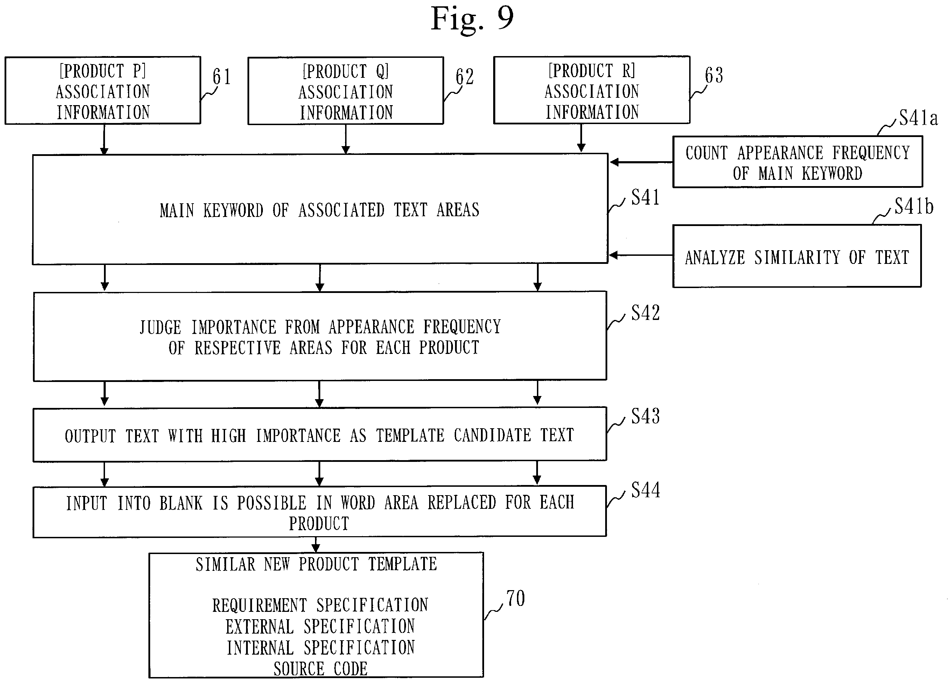

Fig. 9 is a flowchart illustrating operation of the latter process 1B.

With reference to Fig. 8 and Fig. 9, the processing contents of the former process 1A and the latter process 1B will be described below along a concrete example. It is assumed that the former process 1A is performed by the former process 1A illustrated in Fig. 4, and the latter process 1B is performed by the latter process 1B illustrated in Fig. 5. That is, the former process 1A is performed by the division unit 11, and so on, and the latter process 1B is performed by the correspondence judgment unit 41, and so on.

Here, in the concrete example below, explanation is provided using published information.

In the present embodiment, as an example of existent software resource, OpenEL designed by Japan Embedded Systems Technology Association (JASA) will be taken up. OpenEL (Open Embedded Library) is an open platform for an embedded system to standardize the specifications of the software implementation of robotics and control systems, etc. (http://jasa.or.jp/openel/Main_Page/ja). Specifically, OpenEL is a platform to standardize an application programming interface (API) on the layer below the middleware for device control, such as the input from sensors, the output to motors, and so on. OpenEL is a mechanism for increasing the portability, reusability and productivity of device driver software, etc. The information on OpenEL can be downloaded from the web page of Japan Embedded Systems Technology Association.

As for the information disclosed in OpenEL, there only exists currently a specification document corresponding to the external specification 52. Therefore, in the first embodiment, explanation is provided by assuming the requirement specification 51, the internal specification 53 and the source code 54.

As illustrated in Fig. 4, the requirement specification 51, the external specification 52, the internal specification 53 and the source code 54 are data input to the former process 1A. The requirement specification 51, the external specification 52 and the internal specification 53 input to the former process 1A are documents of electronic data. The source code 54 input to the former process 1A is also electronic data.

The requirement specification 51, the external specification 52 and the internal specification 53 generally have structure of table of contents such as chapters, sections and items, etc.

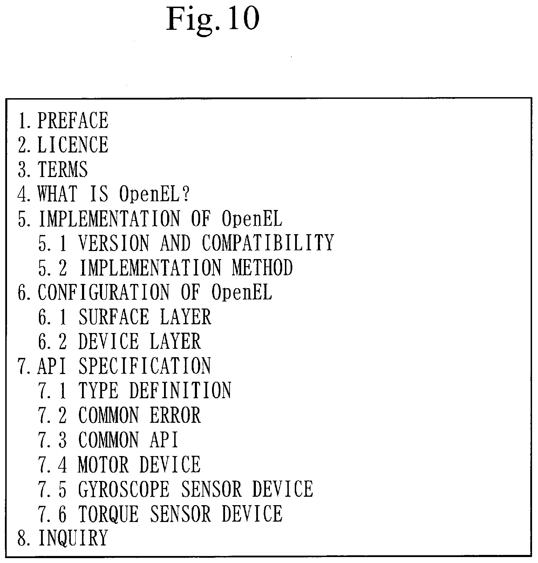

Fig. 10 is a table of contents of a specification in OpenEL 2.0. Fig. 10 is a specification in OpenEL 2.0 corresponding to the external specification 52, and respective specifications related to OpenEL 2.0 have structure of the table of contents as illustrated in Fig. 10.

### <Explanation of Operation of Former Process 1A>

With reference to Fig. 8, Fig. 11 and Fig. 12, operation of the former process 1A will be described.

Fig. 8 is a processing flow in a form corresponding to the block diagram in Fig. 4.

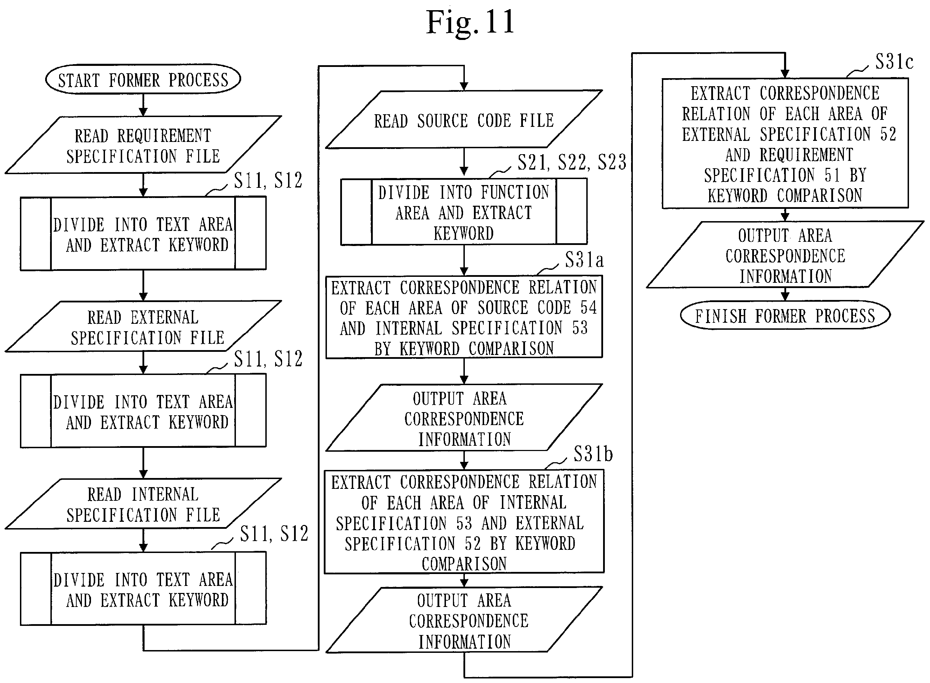

Fig. 11 is also a processing flow of the former process 1A, wherein processes corresponding to Fig. 8 are assigned step numbers in Fig. 8.

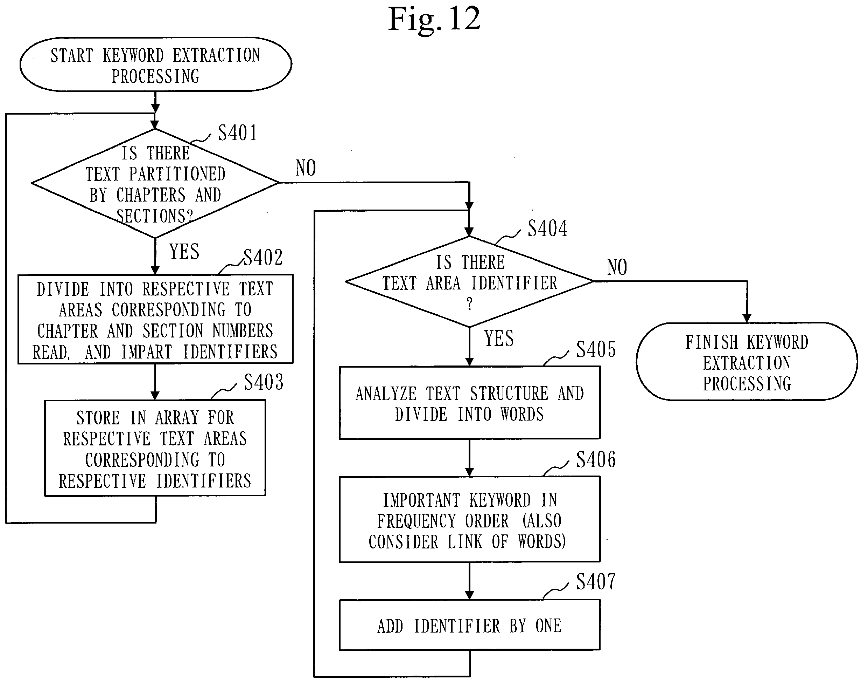

Fig. 12 is a processing flow of the first keyword extraction unit 12 and the second keyword extraction unit 23. That is, Fig. 12 is a flowchart wherein the division unit 11 divides the requirement specification 51, the external specification 52 and the internal specification 53 into text areas after the requirement specification 51, the external specification 52, the internal specification 53 and the source code 54 are read, and the second extraction unit 920 divides the source code 54 into function areas, and extracts a keyword.

The requirement specification 51, the external specification 52, the internal specification 53 and the source code 54 are input into the input IF 903. The requirement specification 51 and so on are stored in the auxiliary storage device 902b when the requirement specification 51 and so on are input through the input IF 903. The data created by the first extraction unit 910, the second extraction unit 920, the creation unit 930 and the determination unit 940 is stored in the auxiliary storage device 902a. When the first extraction unit 910, the second extraction unit 920, the creation unit 930 and the determination unit 940 perform processing, the first extraction unit 910 and so on load data from the auxiliary storage device 902a into the memory 902b. Then, the first extraction unit 910 and so on read out data from the memory 902b, or write data into the memory 902b, and proceed with processing.

### (S11: Division of Specification)

In a step S11, as described with respect to Fig. 6, the division unit 11 divides text areas of the requirement specification 51 and so on into text area in accordance with the structure of chapters and sections. By taking the requirement specification 51 as an example, the division unit 11 cuts out text areas identified by numbers of respective chapters and respective sections, etc. of the requirement specification 51, and associates the respective text areas cut out with numbers of chapters and sections. In short, in the former process 1A, when the number of chapter and section, etc., such as "7. 1", is specified, the division unit 11 retrieves text area of the corresponding text area. This functional capability is provided in software of a general structured editor such as Microsoft Word, etc.

### (S12: Extraction of Keyword)

Next, in a step S12, as described with respect to Fig. 6, the first keyword extraction unit 12 ranks and extracts main keywords from the text data for the respective text areas cut out, and selects a main keyword. As typical software equipped with this functional capability, there is summary creation software. For example, there is EKWords (http://www.djsoft.co.jp/products/ekwords.html) provided as freeware.

In the steps S1 and S12 above, explanation is provided by taking the requirement specification 51 as an example; however, it is also possible to process the external specification 52 and the internal specification 53 similarly to the requirement specification 51.

By the processes of the steps S11 and S12, keywords for respective text areas can be extracted for the requirement specification 51, the external specification 52 and the internal specification 53. Next, explanation is provided of management of the source codes 54.

### (S21: Analysis of Source Code)

In a step S21, the source code analysis unit 21 analyses the source codes 54, and extracts information of an application interface (API) specification from the respective description areas of the source codes 54. The information of the API specification extracted from the respective description areas by the source code analysis unit 21 is function names, input arguments, output arguments, functional capabilities and data types to be used, etc. As software having the functional capabilities of the source code analysis unit 21, Doxygen (http://www.doxygen.jp/) is famous; however, there are a plurality of pieces of other similar program structure analysis software.

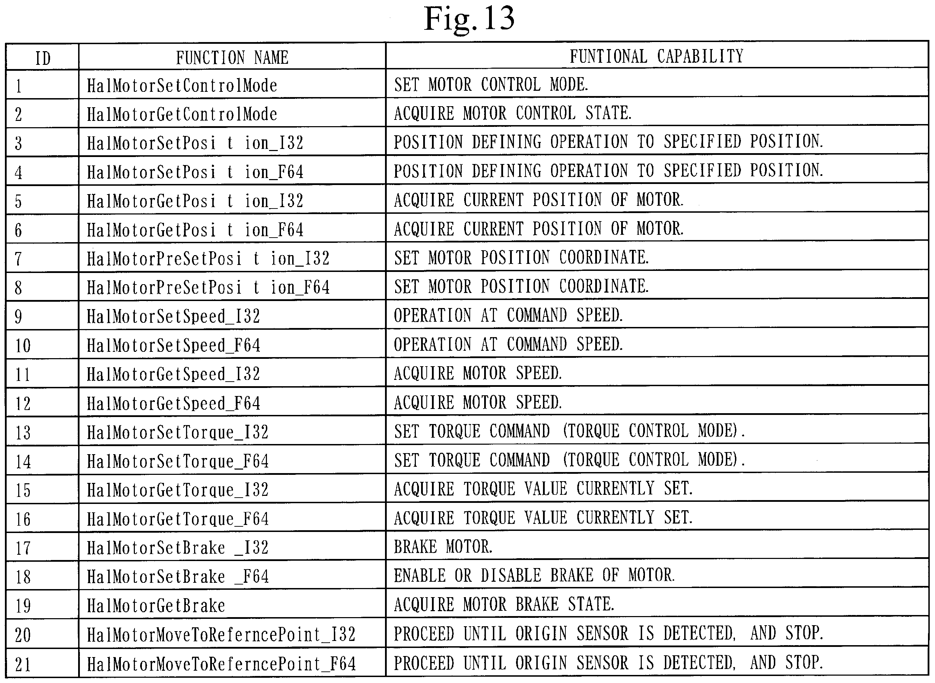

Fig. 13 is a diagram indicating an example of information of the API specification extracted from the source codes 54 by the source code analysis unit 21. When it is applied to OpenEL, as an extraction result of the information of the API specification, it is possible to obtain a list of functions related to "motor" as indicated in Fig. 13. Here, only a part is provided in Fig. 13.

### (S22: Creation of Function List)

Next, in a step S22, the function list creation unit 22 creates a list of functions for respective objects from the information of the API specification extracted by the source code analysis unit 21. That is, the function list creation unit 22 extracts keywords corresponding to objects from "function names, argument names and functional capabilities" in the information of the API specification extracted. The processing by the function list creation unit 22 also is to extract keywords similarly to the first keyword extraction unit 12; however, since the original data of extraction is a list of functions, it is possible to perform extraction more efficiently. Further, since the function names are often indicated by connecting a plurality of words, the function list creation unit 22 dissolves the function names, and performs keyword extraction in a form of a plurality of words. Here, in Fig. 13, a part of the information of the API specification extracted is provided, which is the list of functions related to "motor" as the object. It is possible to regard that Fig. 13 is a function list wherein the object is "motor".

In the information of the API specification extracted, as illustrated in Fig, 13, when common parts of function names are extracted, it is possible to consider a pattern rule wherein names made by adding names of functional capabilities to "HalMotor" become function names. From the texts in "functional capability" described in Japanese sentences on the right side, the common keyword "motor" is extracted. In the example of Fig. 13, it is possible to link "HalMotor" with "motor". When a plurality of candidate keywords ranked are obtained, a word at a high rank is selected. Since there is a case wherein a wrong decision may be made in processing by a computing machinery, it may be possible to provide a scheme wherein a person can confirm a judgment result of objects and correct errors if any.

With respect to Fig. 13, in general source code, programs are described for respective functions commonly. When source code corresponding to the internal specification is implemented, each of the functions should be definitely described in somewhere in the source code. In the source code of the first embodiment, all the functions in the list of functions indicated in Fig. 13 are described. Here, there is description of "API" and "function (Japanized English)" besides description of "function" in the present specification, "function", "API" and "function (Japanized English)" are handled in an equivalent manner in the present specification. The lists of functions for respective objects are created by the function list creation unit 22; however, the function list creation unit 22 creates a list of function names taking an API specification as input. Fig. 13 is a list of functions, i.e., a function list.

### (S23: Extraction of Keywords)

Next, in a step S23, the second keyword extraction unit 23 ranks and extracts main keywords from the function list (Fig. 13) created by the function list creation unit 22. The second keyword extraction unit 23 selects main keywords from function lists for respective objects. In the case of Fig. 13, the list can be regarded as a function list of the object "motor," the second keyword extraction unit 23 ranks and extracts main keywords from the list of Fig. 13.

By the processing as described above, main keywords of the respective text areas of the requirement specification 51, the external specification 52, the internal specification 53 and the source code 54 are extracted. Extraction of the main keywords of the respective text areas corresponds to the arrows in Fig. 6.

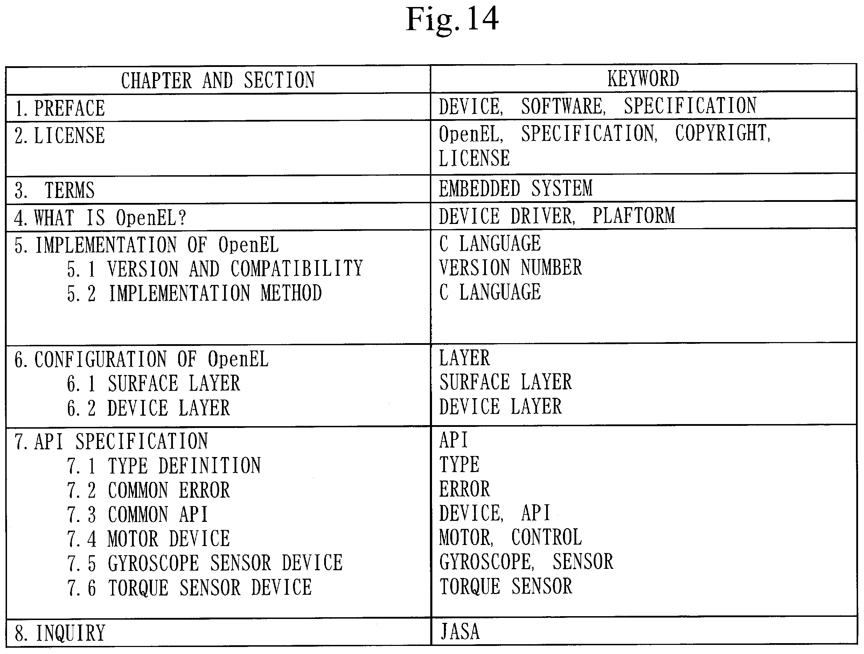

In "Specification of OpenEL 2.0" corresponding to the external specification 52, examples of the keywords of the divided areas related to the step S12 by the first keyword extraction unit 12 are indicated as in Fig. 14.

Fig. 14 indicates a plurality of text areas and keywords of the text areas in "Specification of OpenEL 2.0" corresponding to the external specification 52.

In order to provide an example, structure of chapters and sections (hereinafter, referred to as structure of table of contents) of a tentative and simplified requirement specification 51 is defined as in Fig .15.

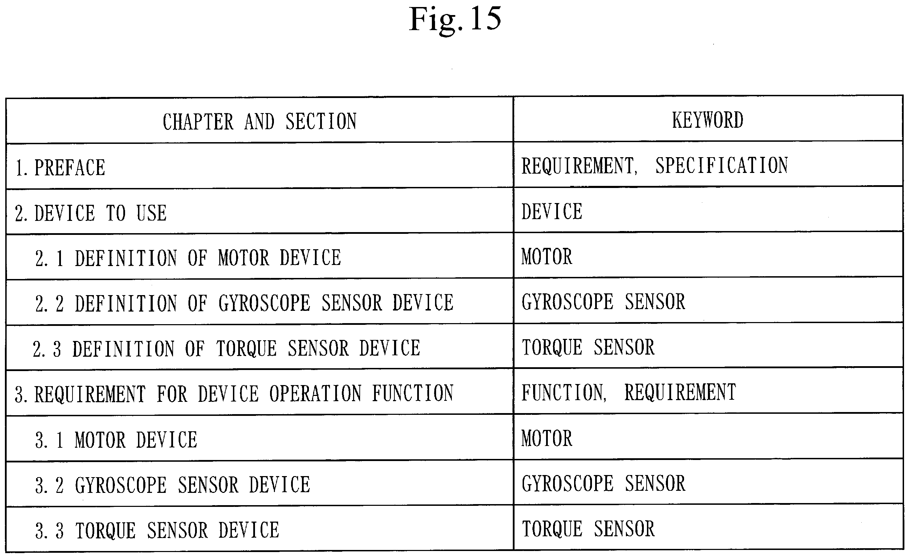

Fig. 15 indicates a plurality of text areas and the keywords of text areas in the tentative and simplified requirement specification 51.

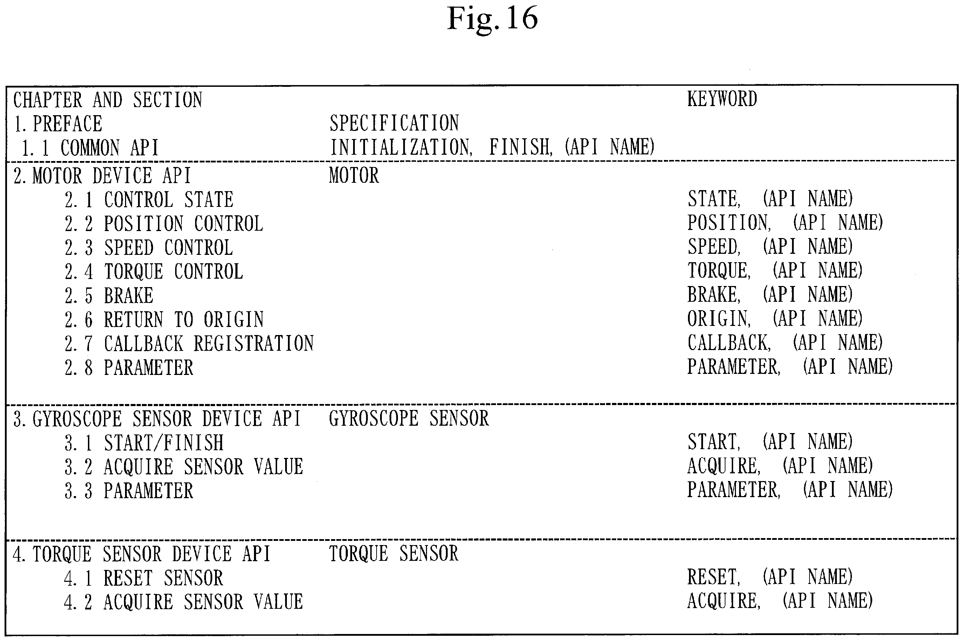

Further, structure of table of contents of an internal specification 53 as in Fig. 16 is temporarily prepared, and keywords are set.

Fig. 16 indicates a plurality of text areas, and keywords of the text areas in the internal specification 53. There is a Doxygen tool to automatically create the internal specification 53 from the source code 54; meanwhile, API names are indicated in the internal specification 53 and the source code 54 as well. It is suitable to adopt API names as keywords to associate areas of the source code 54 with areas of the internal specification 53. The basic algorithm of the correspondence processing is such that a keyword that is found in large quantities by searching the areas of the respective specifications and the areas of the source code, by keywords of the other areas, can be regarded as a keyword for which correspondence can be found the most. Recently, there has been a means whereby the precision of correspondence processing is further improved in addition to simple keyword matching; hence, these means can also be used.

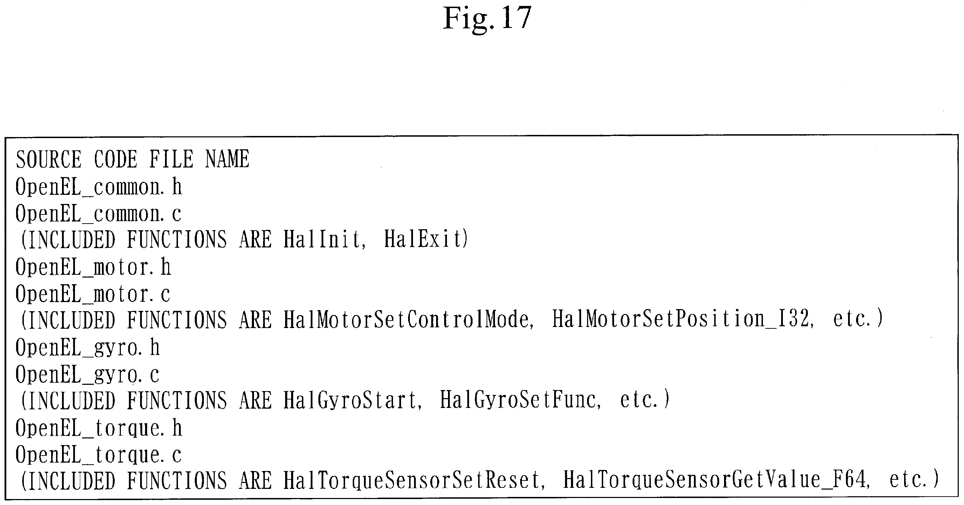

It is assumed that source codes are prepared for respective APIs. Fig. 17 indicates a configuration example of the source code 54. As main keywords of the source code 54, API names can be adopted.

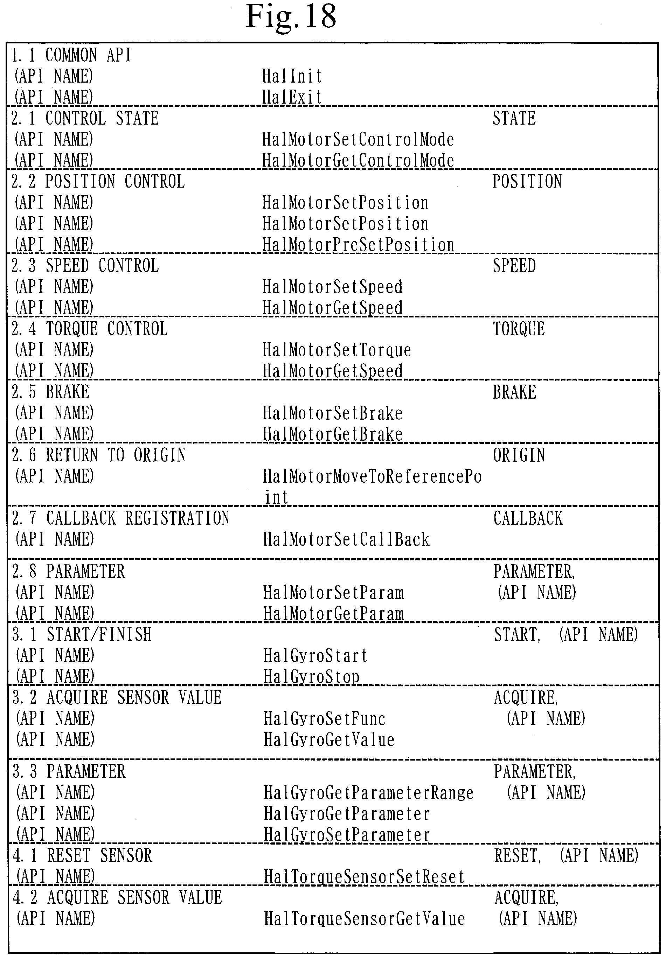

Fig. 18 indicates the API names included in the internal specification 53. "Hallnit, HalExit", etc. in Fig. 18 are keywords common to the keywords of the source code 54.

### (S31: Extraction of Area Association Information)

A first correspondence extraction unit 31a, a second correspondence extraction unit 31b and a third correspondence extraction unit 31c compare main keywords, connect text areas corresponding with one another, and create area correspondence information for respective areas of each specification and source code, for the source code 54 in the form in Fig. 17, the internal specification 53 in the form in Figs. 16 and 18, the external specification 52 in the form of Fig. 14 and the requirement specification 51 in the form of Fig. 15, as described above. The "area correspondence information" is information to associates two areas with each other, in such a manner as the area of the source code 54 with the area of the internal specification 53, the area of the internal specification 53 with the area of the external specification 52, and the area of the external specification 52 with the area of the requirement specification 51. As described with respect to Fig. 6, the first correspondence extraction unit 31a associates the area of the source code 54 with the area of the internal specification 53. The second correspondence extraction unit 31b associates the area of the internal specification 53 with the area of the external specification 52. The third correspondence extraction unit 31c associates the area of the external specification 52 with the area of the requirement specification 51. It is also applicable that a plurality of areas may be associated with one area. In the product P of Fig. 6, the keyword of the areas in the first stages of the source codes 54, and the areas in the first and fourth stages of the internal specifications 53 are all "motor". In this case, the first correspondence extraction unit 31a associates the areas in the first stages of the source codes 54 with the first and fourth stages in the internal specifications 53. In this case, as association information with respect to "motor" being the keyword, the association information creation unit 32 creates the association information composed of four pieces of the first stages of the requirement specification 51 through the source code 54, and the association information composed of three pieces of the first stages of the requirement specification 51, the external specification 52 and the source code 54, and the fourth stage of the internal specification 53.

### (First Correspondence Extraction Unit 31a)

The first correspondence extraction unit 31a extracts correspondence relation among respective areas of the source code 54 and the internal specification 53, by keyword comparison. When the main keywords are API names, it is possible for the first correspondence extraction unit 31a to associate respective description areas of the source code 54 with respective text areas of the internal specification 53, with comparative ease. Note that "associate" means processing to collate which area of the other areas can associate with one area between specifications, or between the source code 54 and the internal specification 53, and to associate one with the other. To give an example, there is a case wherein when one single area is clicked, whereto a hyperlink is set, the other single area is displayed. However, "correspondence" is not necessarily one-to-one correspondence, and there is a case wherein one area is made to associate with the other plurality of areas. The area correspondence information being the result of correspondence by the first correspondence extraction unit 31a, the second correspondence extraction unit 31b and the third correspondence extraction unit 31c is used by the association information creation unit 32 in creating association information. The association information is used by the correspondence judgment unit 41 in the latter process 1B.

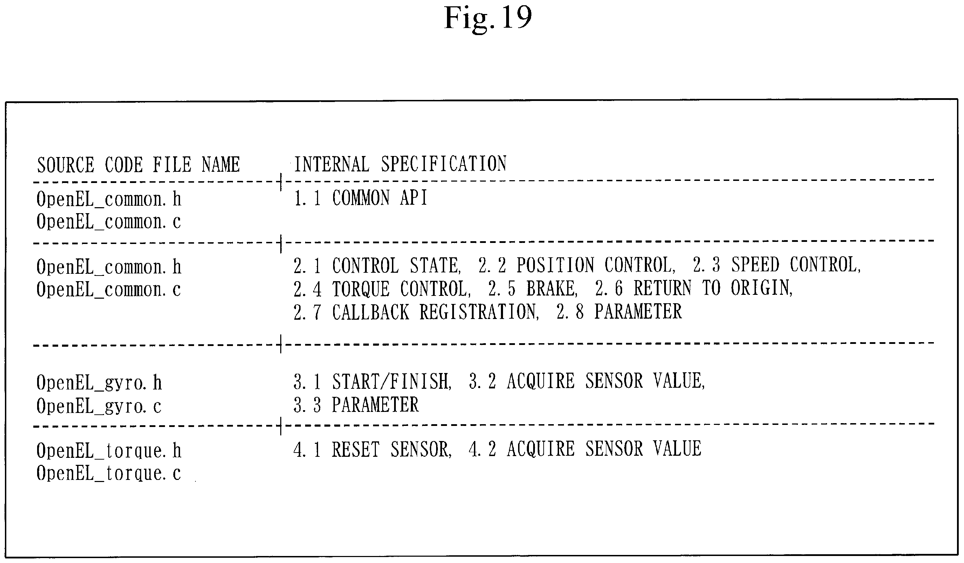

Fig. 19 indicates an example wherein areas of the source code 54 and the internal specification 53 are made to associate with each other, based on the source code 54 including keywords of Fig. 13, and the internal specification 53 including keywords of Fig. 16.

### (Second correspondence extraction unit 31b)

The second correspondence extraction unit 31b extracts correspondence relation between the respective text areas of the internal specification 53 and the external specification 52 by keyword comparison. It is possible for the second correspondence extraction unit 31b to adopt vocabulary selected in accordance with appearance frequency as main keywords. In the process by the second correspondence extraction unit 31b, similarity of the names of chapters and section can be considered as an effective criterion for judgment. This is also apparent from the examples described above. Accordingly, it is possible to effectively associate the respective text areas of the internal specification 53 and the external specification 52.

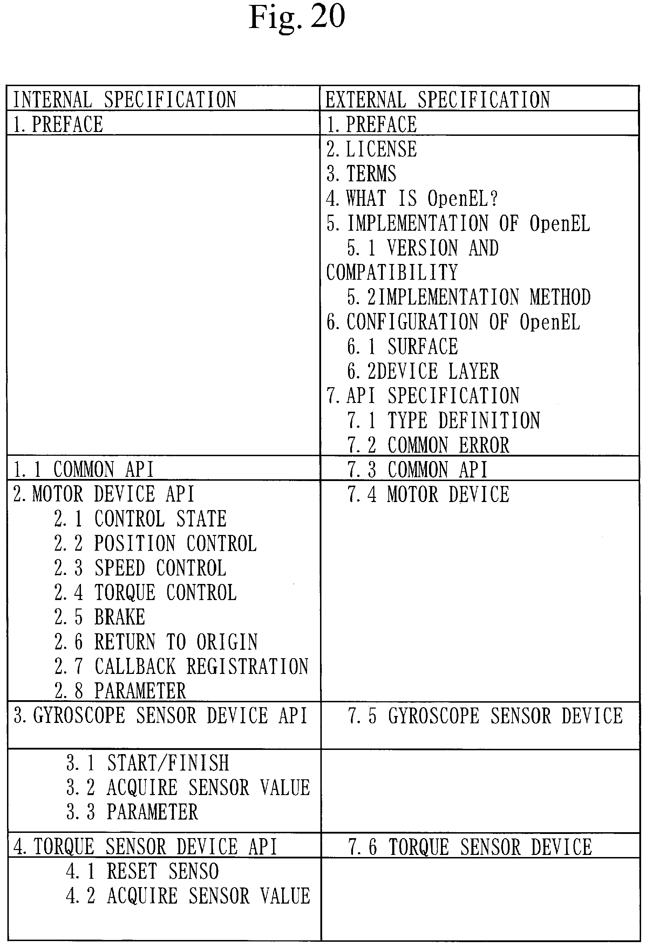

Fig. 20 indicates an example of correspondence of the areas between the internal specification 53 of Figs. 16 and 18, and the external specification 52.

### (Third Correspondence Extraction Unit 31c)

The third correspondence extraction unit 31c extracts correspondence relation between the external specification 52 and the requirement specification 51 by keyword comparison. It is also possible for the third correspondence extraction unit 31c to similarly adopt vocabulary selected in accordance with appearance frequency as the main keywords. However, since configuration of a program is not primarily considered in the requirement specification 51, it is often the case that requirement functions are listed. Therefore, the structure of the table of contents of the requirement specification 51 is likely to be different from the structure of table of contents of a program configuration. Thus, the requirement specification 51 is less likely to correspond to the structure of table of contents of the external specification 52 one to one. However, it is possible to assume that correspondence can be made by appearance frequency of keywords to be used in descripting functional capabilities, and classification analysis by keywords is effective.

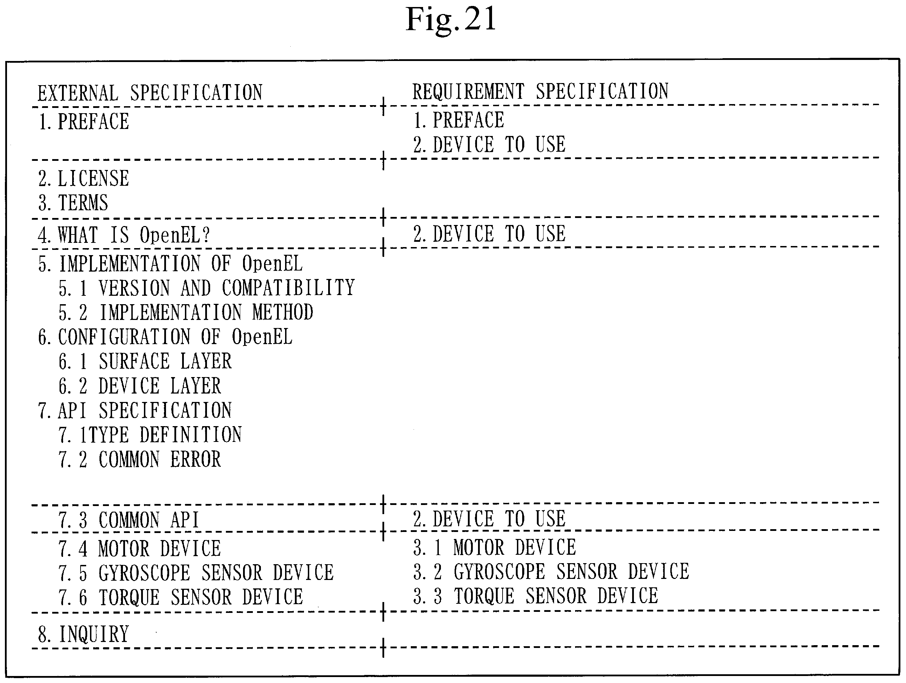

Fig. 21 indicates correspondence between areas obtained from the external specification 52 of Fig. 14 and the requirement specification 51 of Fig. 15.

### (S32: Creation of Association Information 61, 62 and 63)

In a step S33, the first correspondence extraction unit 31a creates area correspondence information associating the area of the source code 54 with the area of the internal specification 53. Similarly, the second correspondence extraction unit 31b and the third correspondence extraction unit 31c create area correspondence information that associates the areas between two specifications. The association information creation unit 32 creates association information using the area correspondence information created by the first correspondence extraction unit 31a and so on. Explanation is provided with reference to Fig. 6. The product P is assumed. The first correspondence extraction unit 31a creates area correspondence information that associates the area in the first stage of the source code 54 and the area in the first stage of the internal specification 53 by "motor" being the keyword, and transmits the area correspondence information to the association information creation unit 32. The second correspondence extraction unit 31b creates area correspondence information that associates the area in the first stage of the internal specification 53 with the area in the first stage of the external specification 52 by "motor" being the keyword, and transmits the area correspondence information to the association information creation unit 32. The third correspondence extraction unit 31c creates area correspondence information that associates the area in the first stage of the external specification 52 with the area in the first stage of the requirement specification 51 by "motor" being the keyword, and transmits the area correspondence information to the association information creation unit 32. The association information creation unit 32 creates association information 61-1 for "motor" being the keyword. Also for the products Q and R, the association information creation unit 32 creates association information for "motor" being the keyword similarly. As for the "motor" in the fourth stage of the internal specification 53, the association information creation unit 32 also creates association information that associates four areas in the first stages of the requirement specification 51 and the external specification 52, the fourth stage of the internal specification 53 and the first stage of the source code 54. The association information creation unit 32 transmits association information 62-1, etc. to the correspondence judgment unit 41.

### (S34: Traceability Information)

As for association of text areas, there is a case wherein traceability information is indicated in respective existent specifications, and the traceability information can be utilized. In Fig. 4, traceability information acquisition units 33a, 33b and 33c are optional components to limit association by the first correspondence extraction unit 31a through the third correspondence extraction unit 31c using traceability information 33d, 33e and 33f, respectively. The traceability information 33f is information on the requirement specification 51, the traceability information 33e is information on the external specification 52, and the traceability information 33d is information on the internal specification 53. The traceability information 33d, 33e and 33f are stored in an auxiliary storage device 902a, and the traceability information acquisition unit 33a, 33b and 33c retrieve the traceability information 33d, 33e and 33c from the auxiliary storage device 902a.

### (S34: Interrelation Judgment Unit 34)

Further, in Fig. 4, a step S34 by an interrelation judgment unit 34 is added. The interrelation judgment unit 34 judges interrelation between keywords from an adjacent level of appearance places of a plurality of keywords. This is not to judge similarity between the text areas, but only to simply judge that a specific keyword is included or not included in the text areas . The interrelation judgment unit 34 handles a plurality of keywords appearing in relatively near places as a keyword group with a strong association therebetween, and it is possible for the interrelation judgment unit 34 to judge, as similar parts, some keywords of the keyword group only if at least some keywords of the keyword group are included even when the whole of the keyword group does not appear. That is, it is possible for the interrelation judgment unit 34 to judge similarity between one text area and another text area based on the similarity between a keyword group existing in the one text area, and a keyword group existing in the other text area. This as well becomes one method to check similarity between texts as mentioned above. The interrelation judgment unit 34 is an optional function for the former process 1A; however, it is possible to check similarity between text areas by the interrelation judgment unit 34.

### ***Explanation of Operation in Latter Process 1B***

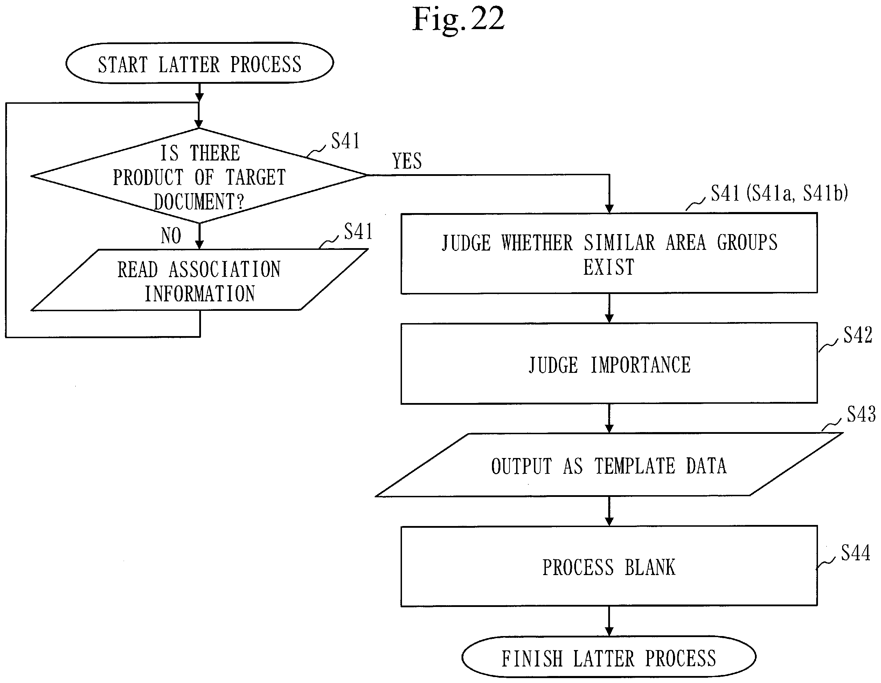

Next, the operation of the latter process 1B will be described with reference to Fig. 9 and Fig. 22.

Fig. 9 is a processing flow in a form corresponding to the block diagram of Fig. 5.

Fig. 22 is a processing flow of the latter process 1B, wherein processes corresponding to Fig. 9 are assigned the step numbers in Fig. 9.

By the latter process 1B, with respect to a requirement specification, an external specification, an internal specification and source code of a product Z to be newly developed, templates are created from those of existent similar products. In the explanation below, three products of P, Q and R exist as existent similar products, for each of which several types of specifications and source code exist.

It is assumed that association of respective text areas of the products P, Q and R is performed by the former process 1A. In the latter process 1B, P, Q and R including the plurality of text areas which have been associated are compared. Since main keywords have been already extracted (step S12, step S23) in the respective text areas, appearance frequencies of main keywords in the documents of P, Q and R are calculated mutually through search between the documents of P, Q and R, and degrees of similarity are obtained. Here, there are several existent methods to check similarity between documents such as to summarize the documents and calculate degrees of similarity of the summaries, in addition to calculating degrees of similarity between a plurality of documents by referring to main keyword groups that are held by respective documents, and it is possible to use these methods. Then, whether the areas with high degrees of similarity exist or not is certified, and areas existing in common among the products P, Q and R are found respectively, and the areas are adopted as templates of the specifications and the source code of new products at this time. Explanation will be provided in detail.

Explanation will be provided along with steps in Fig. 9.

### (S41: Correspondence Judgment)

In a step S41, the correspondence judgment unit 41 performs processing as follows.

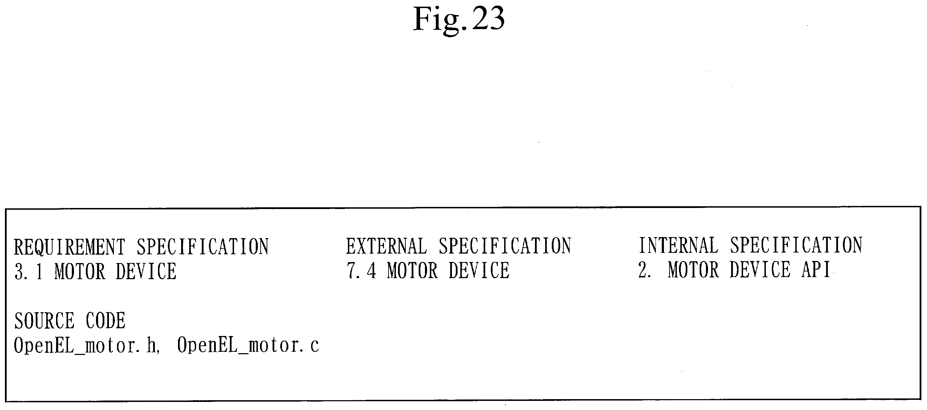

Fig. 23 illustrates association information 61-1 to associate areas in the first stages of the requirement specification 51 through the source code 54 in Fig. 6 with "motor". As illustrated in Fig. 6 and Fig. 9, association information of products P, Q and R is input as input data in the correspondence judgment unit 41. The association information of the products P, Q and R is what is described in Fig. 6. The correspondence judgment unit 41 judges whether similar area groups exist in the products P, Q, and R. The association information 61-1 regarding the product P, the association information 62-1 regarding the product Q and the association information 63-1 regarding the product R, etc. are input in the correspondence judgment unit 41. The association information 61-1 is information associating the areas in the first stages of the requirement specification 51 through the source code 54 of the product P. Similarly, the association information 62-1 is information that associates areas in the first stages of the requirement specification 51 through the source code 54 of the product Q, and the association information 63-1 is information that associates areas in the first stages of the requirement specification 51 through the source code 54 of the product R. The correspondence judgment unit 41 acquires an area group 61G-1 for which association is indicated in the association information 61-1, from the memory 902b. The area group 61G-1 is composed of the areas in the first stages of the requirement specification 51 through the source code 54 of the product P. Similarly, the correspondence judgment unit 41 acquires area groups 62G-1 and 63G-1 from the memory 902b. The area groups 62G-1 and 63G-1 are respectively composed of areas in the first stages of the requirement specification 51 through the source code 54 of the products Q and R.

In the correspondence judgment unit 41, the count unit 41a judges similarity relation among area groups of the area groups 61G-1, 62G-1 and 63G-1 of the products P, Q and R. That is, in the former process 1A, similarity relation in a lateral direction in Fig. 6 is judged with respect to respective areas of the source code 54, the internal specification 53, the external specification 52 and the requirement specification 51, by using one product as the unit. The correspondence judgment unit 41 judges similarity relation in a vertical direction in Fig. 6 with respect to respective area groups of a plurality of products. The count unit 41a retrieves from the memory 902b information on correspondence relation among keywords extracted by the first keyword extraction unit 12 and the second keyword extraction unit 23 in the former process 1A, and the areas for which the keywords are extracted. That is, the correspondence judgment unit 41 acquires the area groups 61G-1, 62G-1 and 63G-1 from the memory 902b. Since these area groups have the same keyword "motor," they are similarity area groups similar to one another taking "motor" as a characteristic point. However, it is impossible for the correspondence judgment unit 41 to realize whether they are similarity area groups. Therefore, the correspondence judgment unit 41 judges whether the area groups 61G-1, 62G-1 and 63G-1 are similarity area groups by using the count unit 41a. The count unit 41a judges that the area groups 61G-1, 62G-1 and 63G-1 are similarity area groups that are similar to one another taking "motor" as a characteristic point by counting keywords of the respective areas in the area group 61G-1 and so on.

Fig. 7 is a judgment result in a case wherein the correspondence judgment unit 41 uses the count unit 41a. Fig. 7 illustrates whether similarity area groups similar to one another having the same characteristic point exist or not for each product. The row of "motor" in Fig. 7 indicates that the area groups 61G-1, 62G-1 and 63G-1 being similarity area groups exist in the products P, Q and R. The row of "gyroscope sensor indicates that the "area groups 61G-2 and 62G-2" (Fig. 6) being similarity area groups exist in the products P and Q. The row of "torque sensor" indicates that the "area groups 61G-3 and 63G-2" (Fig. 6) being similarity area groups exist in the products P and R.

As described above, when the correspondence judgment unit 41 uses the count unit 41a, it is possible to associate respective area groups of the products P, Q and R as similarity area groups by the count unit 41a counting keywords. However, it is applicable that the correspondence judgment unit 41 extracts relative text areas by degrees of similarity of a plurality of keywords and texts, etc. having a strong correlation with one another, whether or not the count unit 41a is used. As examples of a plurality of keywords having a strong correlation with one another, there are a plurality of keywords such as "device", "speed" and "brake" related to "motor". When the correspondence judgment unit 41 extracts text areas including "device", "speed" and "brake" as areas of documents respectively for the products P, Q and R, the areas are regarded as areas wherein more similar contents are written and which have stronger relation rather than the text areas selected by one keyword.

Further, it is also applicable to create a summary by the text analysis unit 41b to analyze sentence structure. Explanation is provided by taking the area groups 61G-1 and 62G-1 in Fig. 6 as examples. The text analysis unit 41b creates summaries of at least any area of the areas of the internal specifications 53, the areas of the external specifications 52 and the areas of the requirement specifications 51, in the area groups 61G-1 and 62G-1. The text analysis unit 41b judges, by comparing the summaries of the area group 61G-1 and the area group 62G-1, whether the area group 61G-1 and the area group 62G-1 are similarity area groups similar to each other. It is preferable if comparison between summaries is performed on specifications of a same type; however, The text analysis unit 41b may also compare summaries of specifications of different kinds.

### (S42: Judgement of Importance Degree)

Next, in a step S42, the importance judgment unit 42 refers to Fig. 7 created by the correspondence judgment unit 41. The importance judgment unit 42 confirms that similarity area groups related to "motor" exist in all the products P, Q and R, and judges that importance degrees of the similarity area groups taking "motor" as a characteristic point are high. Further, the importance judgment unit 42 confirms that similarity area groups related to "gyroscope sensor" and "torque sensor" in Fig. 7 exist with respect to the products P and Q, and the products P and R. The similarity area group taking "gyroscope sensor" as a characteristic point, and the similarity area group taking "torque sensor" as a characteristic point are judged to have about importance of an intermediate degree.

### (S43: Output of Template)

In a step S43, the template output unit 43 outputs a similarity area group of the product P as for similarity area groups taking "motor" as a characteristic point, which are confirmed to exist three for the products P, Q and R. Here, it is also applicable to output a similarity area group of the product Q or the product R if only the similarity area group is a similarity area group taking "motor" as the characteristic point.

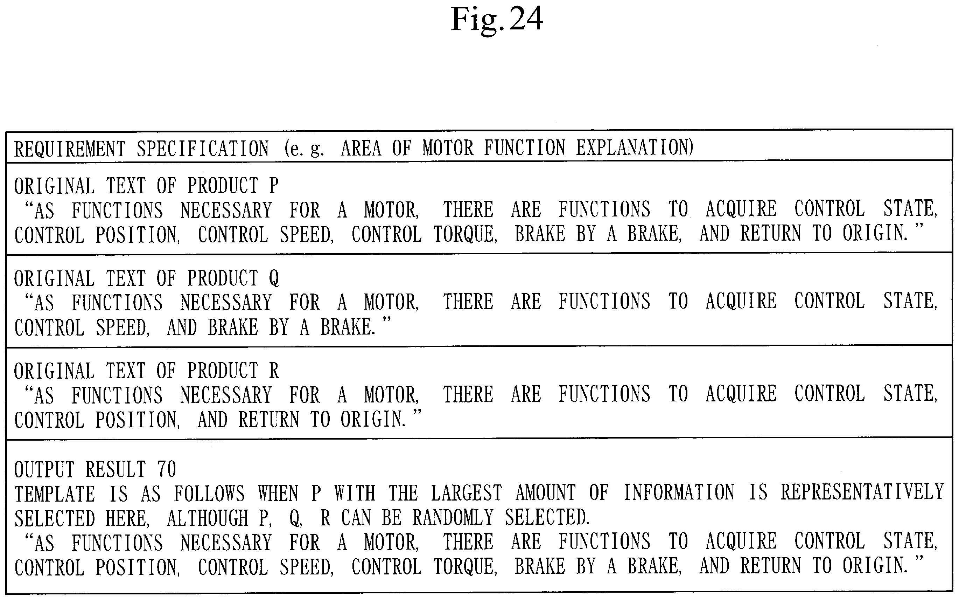

Fig. 24 is a diagram describing an example of a template of a requirement specification.

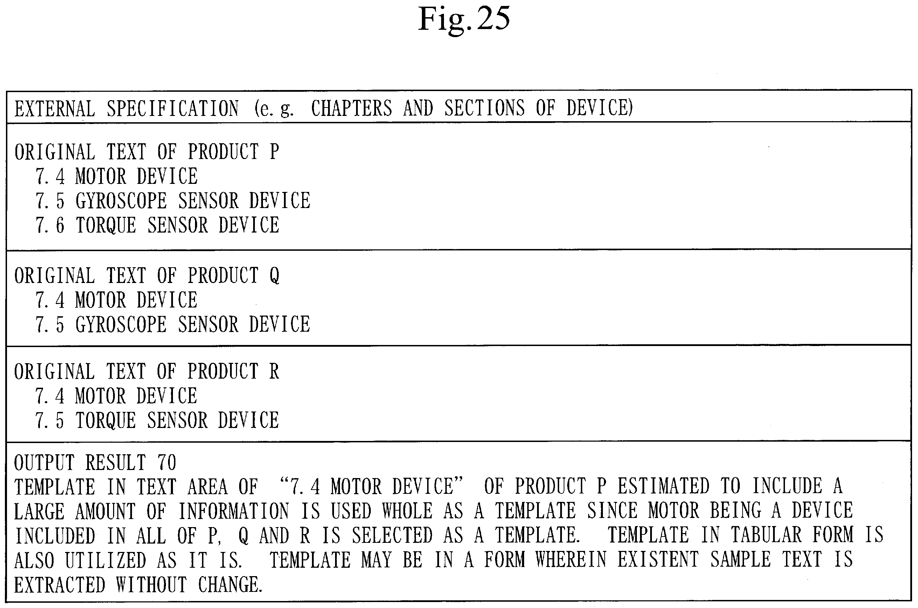

Fig. 25 is a diagram describing an example of a template of an external specification 52.

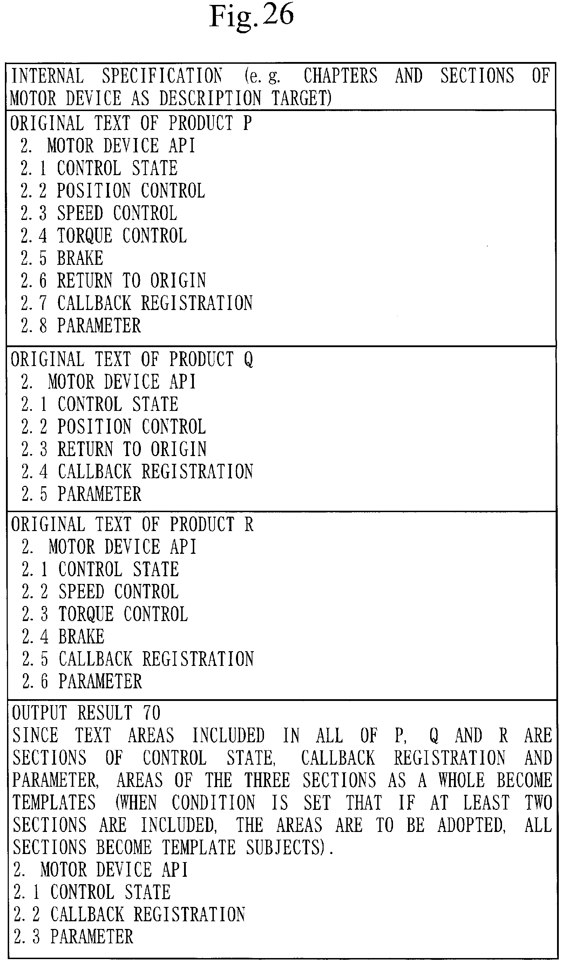

Fig. 26 is a diagram describing an example of a template of an internal specification 53.

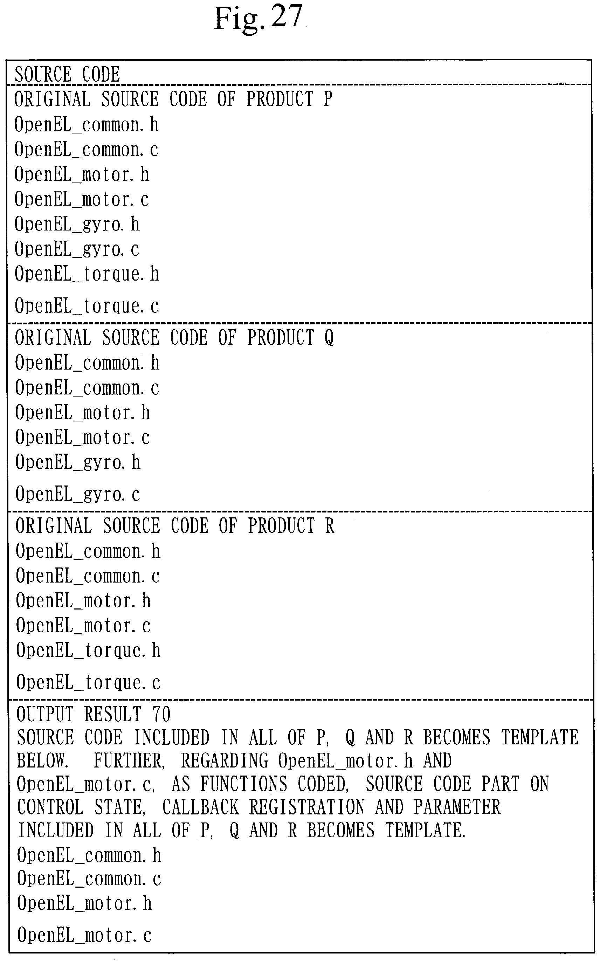

Fig. 27 is a diagram describing an example of a template of source code.

### (S44: Creation of Blank)

Lastly, in a step S44, the blank creation unit 44 checks if there are parts of description unique to the products P, Q and R, such as model names of products, model numbers and product names, etc. of devices such as a motor, etc. in the respective templates output by the template output unit 43. If there are any, the parts are corrected into blanks, to which newly input is possible when the templates are used.

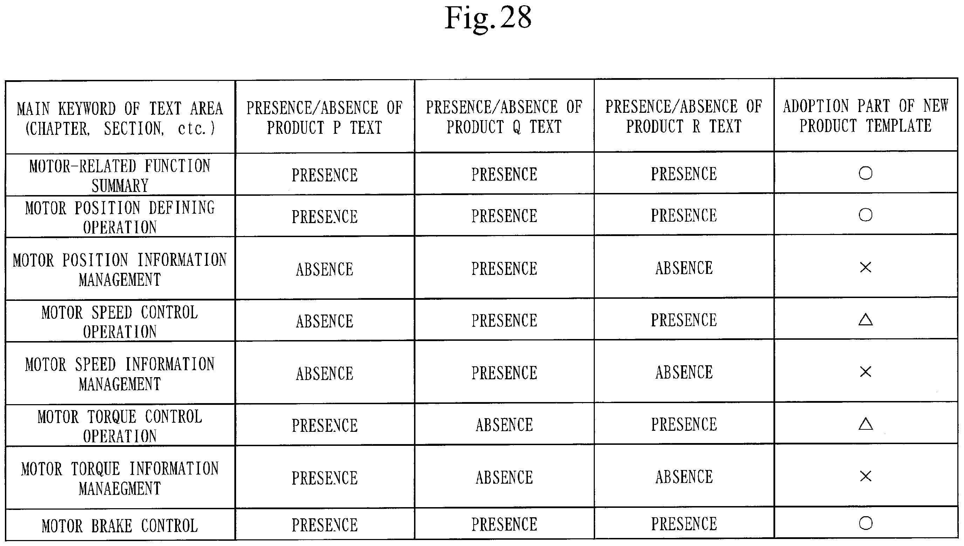

Fig. 28 illustrates a sample wherein what are extracted as main keywords of the respective text areas are indicated in tabular form. Fig. 28 is a diagram to organize whether text areas including main keywords exist in the requirement specifications 51, the external specifications 52, the internal specifications 53 and the source codes 54 respectively of the products P, Q and R. When a text area is common to three products, the text area becomes a candidate to be adopted as a template for a new product. Further, when a text area is included only in two products, the text area becomes a middle level candidate, and when a text area is included only in one product, it becomes difficult to adopt the text area as a candidate. This is what is described in Fig. 7 above, which is judged by the importance judgment unit 42.

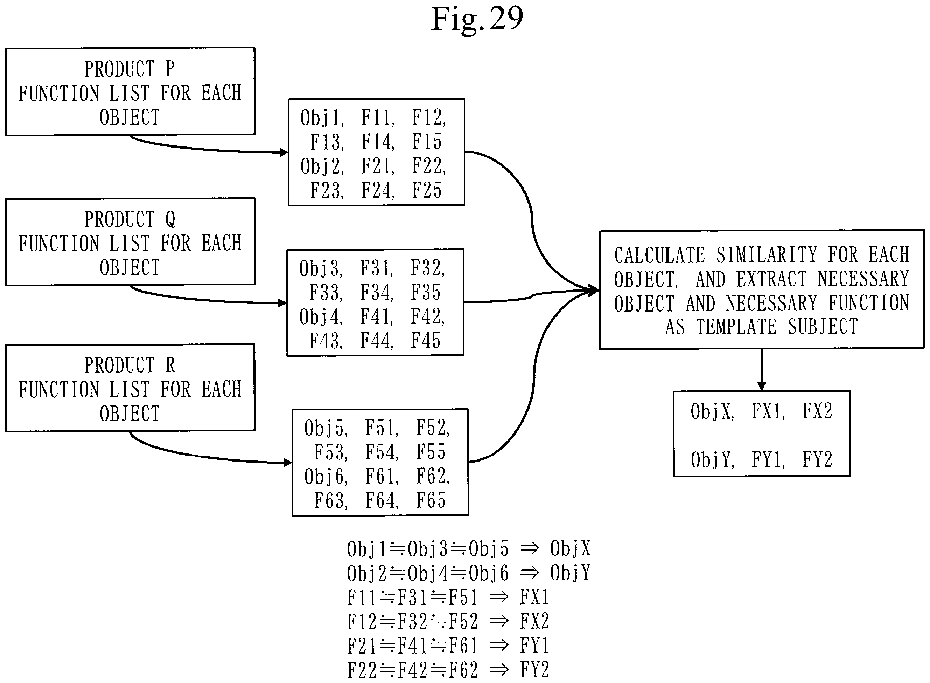

Fig. 29 is an explanatory drawing illustrating processing of extracting common objects and functions in the latter process.

The template creation apparatus 1 as described above associates description of specification documents corresponding to description of objects and functions in the source code 54 by tracing back to the internal specification 53, the external specification 52 and the requirement specification, with respect to a single product in the former process 1A. In order to make relation among respective design information components clear, the template creation apparatus 1 performs arrangement for respective corresponding parts. In the latter process 1B, the template creation apparatus 1 compares the corresponding parts between the documents of a plurality of products, and selects important and common description as material for templates.

### ***Explanation of Effect of First Embodiment***

(1) The template creation apparatus 1 of the first embodiment associates text areas by tracing back to upstream of design, from the source code to the internal specification, the external specification and the requirement specification, through performing the former process 1A and the latter process 1B; hence, it is possible to create templates for a requirement specification, an external specification, an internal specification and source code of a similar product.
(2) By the template creation apparatus 1, it is possible to automatically create specifications and source code to be bases like sample documents. Thus, even when a participating designer of a development project is not proficient at a design technique of a development product, it is possible to provide common sample documents to be bases. Thus, it is possible to create specifications effectively.
(3) As described in the first embodiment 1, templates respectively of source code, an internal specification, an external specification and a requirement specification of a similar product are created around common text areas, based on the requirement specification 51, the external specification 52, the internal specification 53 and the source code 54 of a plurality of existent products. Thus, by using the respective templates created, it is possible for the developer to describe a requirement specification, an external specification, an internal specification and source code of a new product around a relatively important design description.
(4) Further, since a template from which description of optional processes which are not so important has been removed is created, editing works can be performed efficiently in development.

### ***Other Configuration***

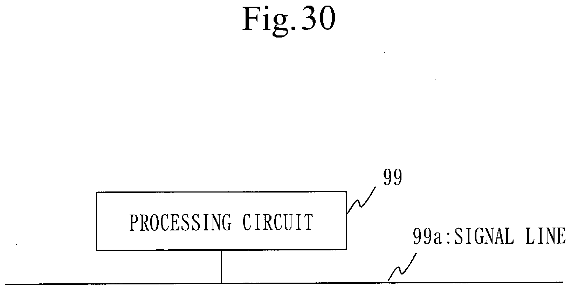

Fig. 30 is a diagram illustrating a processing circuit 99. In the present embodiment, the functional capabilities of the "units" in the template creation apparatus 1 are realized by software; however, as a variation, the functional capabilities of the "units" in the template creation apparatus 1 may be realized by hardware. That is, by the processing circuit 99, the functional capabilities of the "units" and the functional capabilities of the "storage device" in the template creation apparatus 1 illustrated as the processor 901 described above are realized. The processing circuit 99 is connected to a signal line 99a. The processing circuit 99 is a dedicated electronic circuit to realize the functional capabilities of the "units" and the functional capabilities of the "storage device" of the template creation apparatus 1. The processing circuit 99 is, in particular, a single circuit, a composite circuit, a processor that is made into a program, a processor that is made into a parallel program, a logic IC, a gate array (GA), an application specific integrated circuit (ASIC), or a field-programmable gate array (FPGA).

The template creation apparatus 1 may be equipped with a plurality of processing circuits that replace the processing circuit 99. By a plurality of these processing circuits, the functional capabilities of the "units" in the template creation apparatus 1 are realized as a whole. Each of the processing circuits is a dedicated electronic circuit similarly to the processing circuit 99.

As another variation, the functional capabilities of the template creation apparatus 1 may be realized by a combination of software and hardware. That is, a part of the functional capabilities of the template creation apparatus 1 may be realized by dedicated hardware, and the rest functional capabilities may be realized by software.

The processor 901, the storage device 902 and the processing circuit 99 are collectively referred to as "processing circuitry." That is, the functional capabilities of the "units" and the storage device of the template creation apparatus 1 are realized by the processing circuitry.

The "units" may be replaced with "steps," "procedures" or "processing". Further, the functional capabilities of the "units" may be realized by firmware. That is, the operation of the template creation apparatus 1 can be regarded as a template creation program and a template creation method. Further, the functional capabilities of the "units" may be realized as a storage medium to store a template creation program.

### Second Embodiment.

### <Extraction Example Different in Correspondence Relation for Requirement Specification 51 and External Specification 52>

Hereinafter, a second embodiment will be described. In second and third embodiments below, the template creation apparatus 1 of the first embodiment is used. In the second and third embodiments, in comparison to the first embodiment, data to be input in the former process 1A is different from that in the first embodiment.

In the second embodiment, as an example of the requirement specification 51, explanation is provided by taking as an example "SWP1-D301 Move-Revo Notification System, Software Requirement Specification" (written by Yuuki Yamamoto) (http://asdoq.jp/research/jinzai.html) open to the public by human resource development department in Association of System Documentation Quality (ASDoQ). This software requirement specification is hereinafter indicated as a requirement specification 51-2. The requirement specification 51-2 assumes an imaginary single-seated electric moving vehicle (high-function wheelchair capable of autonomous cruising) called "move-revo". The requirement specification 51-2 further relates to a "notification system" to notify abnormality to a help center when abnormality occurs, as one of a plurality of embedded systems installed on the moving vehicle.

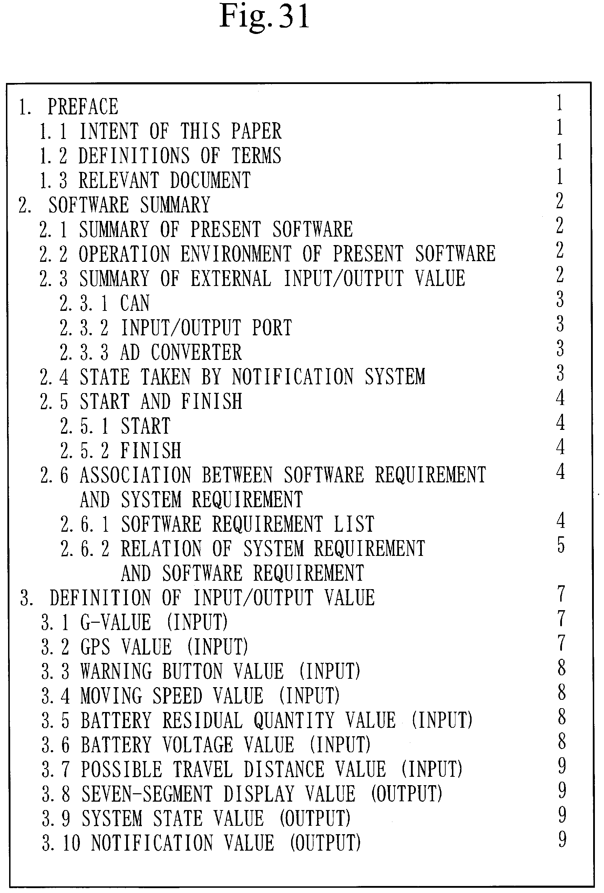

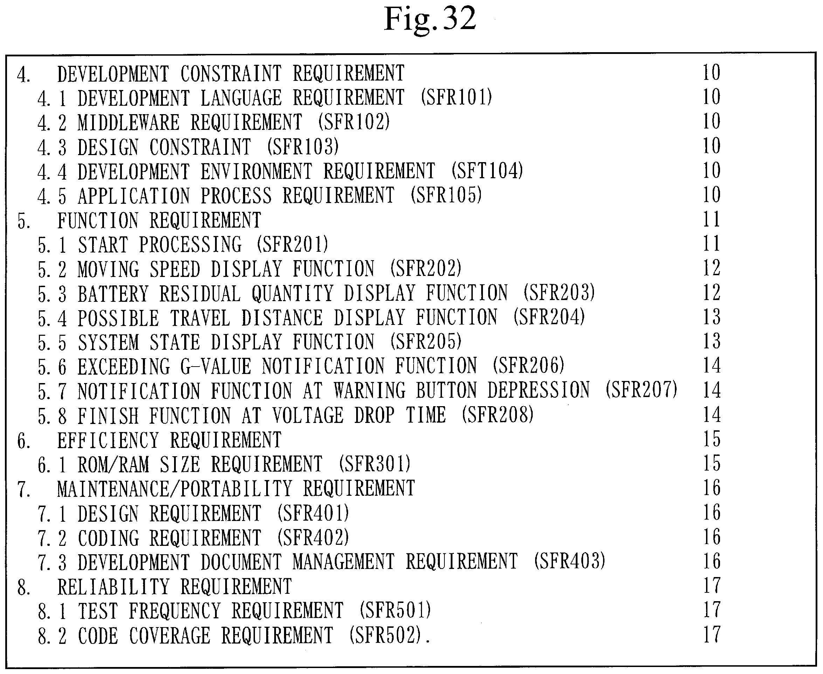

Fig. 31 and Fig. 32 indicate the table of contents of the requirement specification 51-2. The table of contents of the requirement specification 51-2 is divided into two diagrams of Fig. 31 and Fig. 32. "3.10 Notification Value (Output) 9" at the bottom of Fig. 31 links to "4 Development Restriction Requirement 10" in the upper column of Fig. 32. The numbers in the right end indicate the numbers of pages.

Generally, as relation between a requirement specification and an external specification, description of requirements for functional capabilities in the requirement specification is associated most deeply with function description in the external specification. Hereinafter, the overall structure will be sequentially confirmed, and the parts corresponding to requirements for functional capabilities will be noted. Hereinafter, explanation is provided with reference to Fig. 31 and Fig. 32.

In the chapter of "1. Preface", there are "1.1 Intent of This Paper", "1.2 Definitions of Terms" and "1.3 Relevant Document", and the chapter of "1. Preface" is generally an introductory description of the paper without particular description related to functional capabilities.

In the chapter of "2. Software Summary" of an actual requirement specification, description related to functional capabilities is included in a dispersed manner in each section of "2.1 Summary of Present Software", "2.3 Summary of External Input/Output Value", "2.4 State Taken by Notification System" and "2.5 Start and Finish". However, the chapter describing functional capabilities in detail follows, and description in the present chapter is limited only to an outline level, or a supplementary information level for function description.

In the chapter of "3. Definition of Input/Output Value," there is description about several types of numerical conditions at the time of defining functional capabilities in detail, and it is recognized that description of supplementary information on functional capabilities is included. That is, at the time of describing respective functional capabilities, these numerical conditions are referred to as needed.

In the chapter of "4. Development Restriction Requirement", relative documents to be referred to as requirement conditions of the requirement specification 51-2 are described, which is not linked to description related to functional capabilities specifically.

In the chapter of "5. Function Requirement," descriptions of respective functional capabilities are listed directly. The chapter of "5. Function Requirement" is made to directly relate to description of functions in the external specification 52. However, there is no guarantee that the chapter of "5. Function Requirement" is made to relate to all the main functions in the external specification 52 one to one. This is because there is a possibility that the functional capabilities themselves may be implemented dispersedly by a plurality of functions.

In the chapter of "6. Efficiency Requirement", restriction on implementation is described. The chapter of "6. Efficiency Requirement" is not particularly linked to description related to functional capabilities.

In the chapter of "7. Maintenance - Portability Requirement", consideration in coding at the time of implementing a program is described. The chapter of "7. Maintenance - Portability Requirement" is not particularly linked to description related to functional capabilities.

In the chapter of "8. Reliability Requirement", testing conditions are described, which are not particularly linked to description related to functional capabilities.

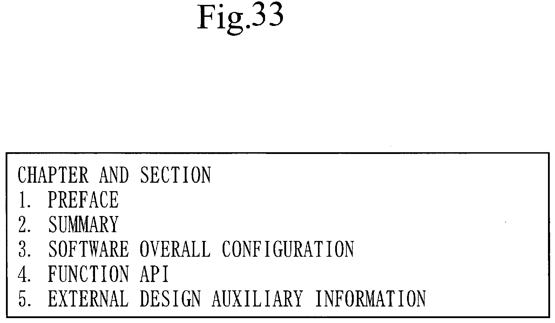

Next, by analyzing description related to functional capabilities in the requirement specification 51-2 described above, and tentatively developing a proposed structure of a simplified table of contents of an external specification 52 corresponding to the requirement specification 51-2, the structure is obtained as in Fig. 33.

Fig. 33 illustrates a structure of a simplified table of contents of the requirement specification 51-2. In the chapter of "1. Preface" of Fig. 33, positioning of the external specification 52 is described.

In the chapter of "2. Summary", summary of aim and functional capabilities obtained by the requirement specification 51-2 are described. Further, information defining the external specification 52 externally such as words definition and relevant documents, etc. is described.

In the chapter of "3. Overall Configuration of Software", design information from a different viewpoint that does not appear in a requirement specification is described. A suitable overall configuration of software in implementation is described. The software configuration is designed in consideration of performance in terms of time, efficient use of resources such as a memory to be used, etc., easiness of coding design, and maintenance and reusability of programs, etc. It is also defined by "3. Overall Configuration of Software" how the functions in the function API in the next chapter are called, such as by a task, a thread, a callback, several types of handlers, etc. When "Fig. 1 State Transition" of the actual requirement specification 51-2 is referred to, it is assumed that main loop processing is operated while executing several types of functional capabilities in a normal mode after power is turned on and start processing is performed. During the main loop, necessary functional capabilities which are necessary for button operation and judgment by voltage check, etc. are called , and the processing is performed, whereby the main loop processing is continued. When abnormality occurs in respective types of functional capabilities, the mode is shifted to an abnormal mode and power is disconnected.

In the chapter of "4. Function API", interface specifications are described for all functions in a surface layer corresponding to respective functional capabilities.

In respective functional capabilities in the present embodiment, from "5. Function Requirement" of the requirement specification 51-2, it is assumed that functions are provided for each of:
5. 1 Start Processing;
5. 2 Moving Speed Display Function;
5. 3 Battery Residual Capacity Display Function;
5. 4 Possible Travel Distance Display Function;
5. 5 System State Display Function;
5. 6 Exceeding G-Value Notification Function;
5. 7 Notification Function At Warning Button Depression; and
5. 8 Finish Function At Voltage Drop Time.

Here, in the chapter of "4. Function API", the numbers of sections from 4. 1 through 4. 8 are added sequentially for these respective functional capabilities.

Further, from the inside of the main loop described above, it is called functions corresponding to:
5. 2 Moving Speed Display Function;
5. 3 Battery Residual Capacity Display Function;
5. 4 Possible Travel Distance Display Function;
5. 5 System State Display Function;
5. 6 Exceeding G-Value Notification Function; and
5. 7 Notification Function At Warning Button Depression.

In the chapter of "5. External Design Auxiliary Information" in Fig. 33, supplementary numerical values and points of attention, etc. are described in implementing the respective functions described in "4. Function API".

Explanation will be provided below of processing applying the template creation apparatus 1 of the first embodiment to the requirement specification 51-2 and the external specification 52 described above.

Since the structures of the table of contents of the requirement specification 51-2 and the external specification 52 are described as above, it is possible for the division unit 11 to easily divide and output text data.

Next, it is possible for the first keyword extraction unit 12 to extract main keywords as follows.

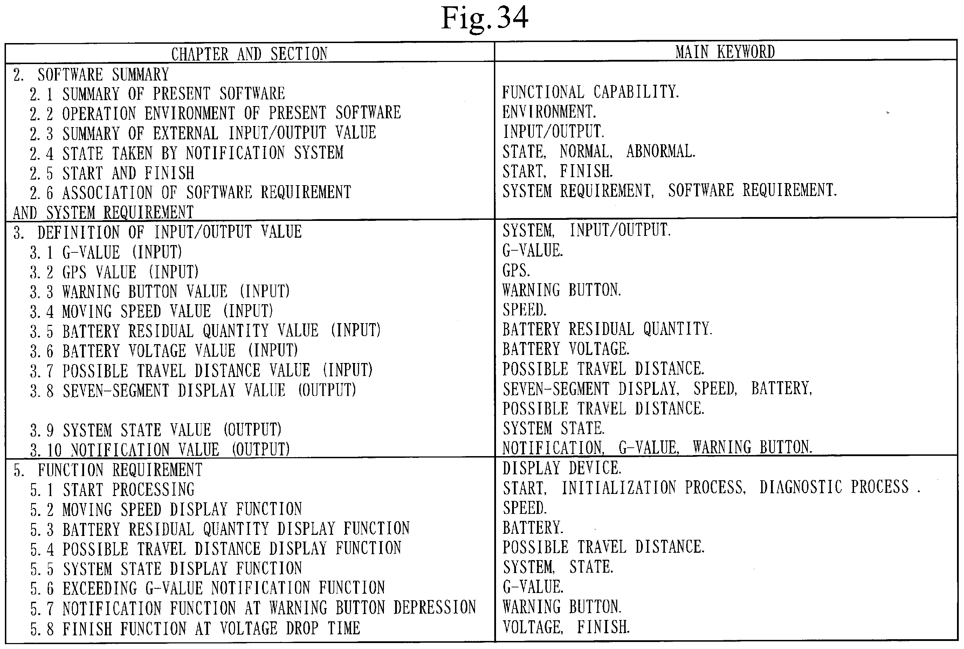

The requirement specification 51-2 is illustrated in Fig. 34 by limiting the chapters and sections to those related to functional capabilities as described above.

Fig. 34 is main keywords extracted from the requirement specification 51-2.

As for the external specification 52, main keywords that especially appear frequently scarcely appear in the chapters of "1. Preface", "2. Summary" and "3. Overall Configuration of Software". They are positioned as introductory text areas without the need for correspondence particularly.

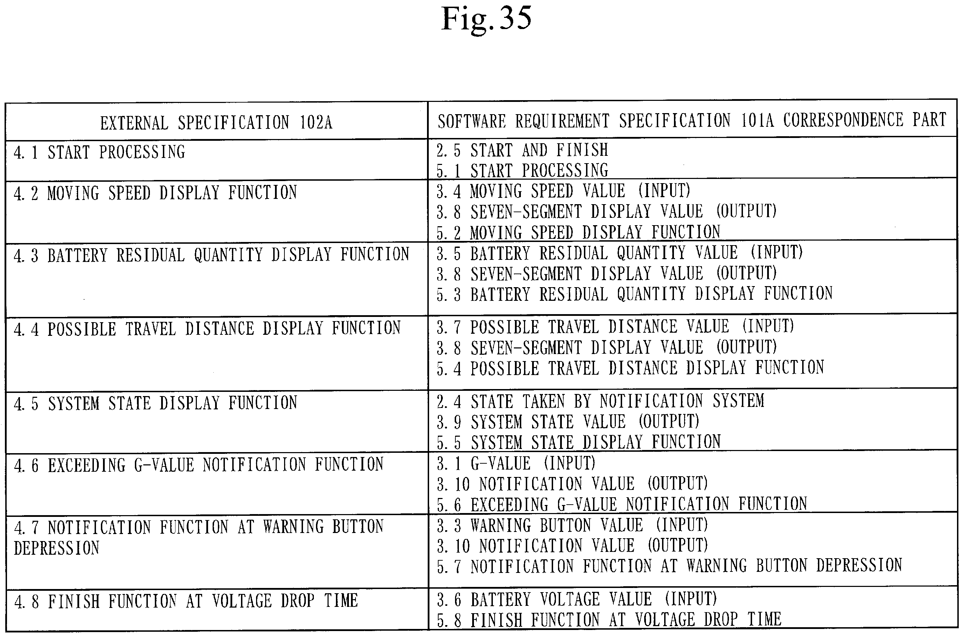

As for the chapter of "4. Function API", several types of functional functions are described for respective items as described above. Thus, it is possible to associate respective functions to parts where main keywords often appear on the side of the requirement specification 51-2. The present example is illustrated in Fig. 35. That is, Fig. 35 is a processing result by the first correspondence extraction unit 31a.

Basically, association of respective text areas between documents is performed centering around the main keywords; however, as an optional auxiliary means, it is possible to perform association of high precision by performing text structure analysis in detail as Japanese texts, examining similarity and taking correspondence semantically.

Similarly to the first embodiment, it is assumed that the internal specification 53, the source code 54 and respective functions are associated with and created from the external specification 52, and it is possible to take correspondence similarly to the first embodiment.

As illustrated in the second embodiment in the above, generally, text areas of specifications corresponding to respective functions in source code usually are description parts of one-to-one correspondence around an external specification and an internal specification. However, in a case of a requirement specification, items of the requirement description do not always correspond to respective functions one to one. It is also possible to perform efficiently by the template creation apparatus 1 described in the first embodiment organization of association of specifications of many-to-many correspondence. Thus, it is possible to automatically create templates wherein common and necessary design information is included.

### Third Embodiment

### <Another Extraction Example of Correspondence Relation between Requirement Specification 51 and External Specification 52>

Next, explanation is provided by taking Japan Medical Association Standard Receipt Software (https://www.orca.med.or.jp/receipt/) in ORCA PROJECT that is an open-source project established, developed and disclosed by the Japan Medical Association Research Institute. In the project, disclosure of specification documents and source code are enhanced. The entire system is on a large scale including a database system; however, software implementation parts in Web APIs to perform processing of receipt-related task from a client terminal device are subjects to be applied the template creation apparatus 1 as described in the first embodiment.

As a technical document corresponding to the requirement specification 51, a basic specification (http://ftp.orca.med.or.jp/pub/data/receipt/tec/orca_bd_bss_010.pdf) of the entire system is taken. Further, as a technical document corresponding to the external specification 52, an API specification of Japan Medical Association Standard Receipt Software (https://www.orca.med.or.jp/receipt/tec/api/overview.html#ver470) is taken. This is not made into a form of a document united into one book on a published webpage; however, detailed explanation documents of respective APIs are linked in a hypertext form in an API list so that the detailed explanation documents can be referred to. As input data to the template creation apparatus, the API list and the detailed explanation documents of the respective APIs are handled as one book of document data.

Further, the APIs are implemented as Web APIs from client terminals to a server wherein a database exists, and internal processing to actually manipulate the database is performed by a COBOL module called APS. Therefore, source code corresponding to these respective APIs is implemented in COBOL. In the present software, there is no internal specification 53 implemented in COBOL, and it is necessary to interpret the source code directly (As for the present source code, it is impossible to create an internal specification by Doxygen, etc.). Therefore, in this example, explanation is provided by assuming that an internal specification 53 in accordance with the API list is tentatively created.

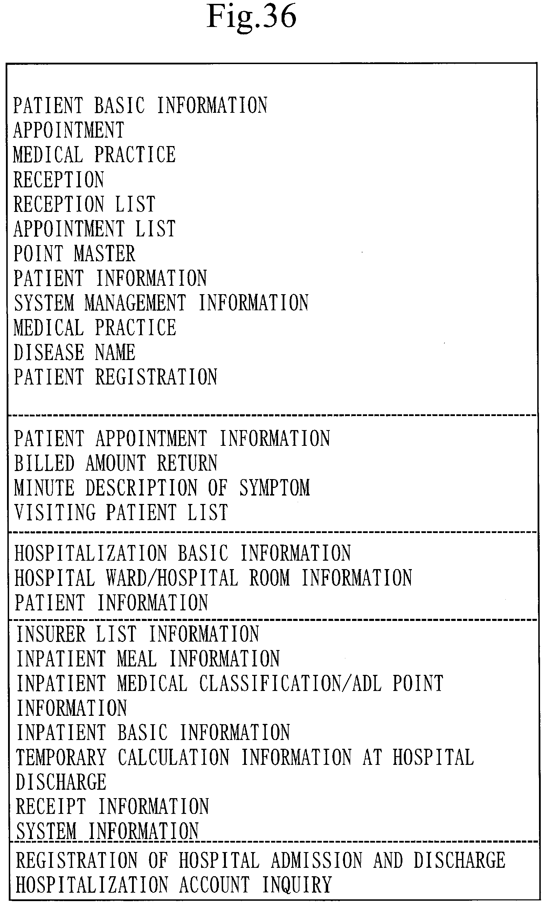

Fig. 36 illustrates a list of the Web APIs corresponding to the external specification 52.

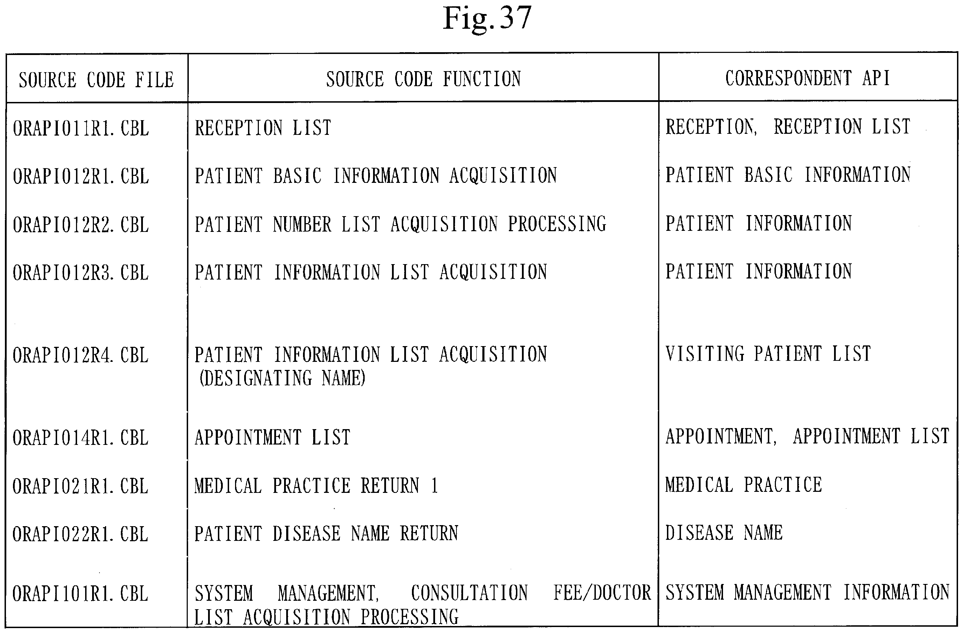

Fig. 37 illustrates a list of source code files of the Web APIs. At the right end, what are assumed to be correspondent APIs are indicated. Since detailed response information and sample source code are described in the API specification corresponding to the external specification, it becomes possible to take exact correspondence by obtaining similarity degrees focusing on keywords by the former process 1A.

Fig. 37 illustrates correspondence between the source code 54 and the external specification 52 directly; however, correspondence between an internal specification 53 and the external specification 52 is in a form of corresponding to source code one to one in COBOL since there exists internal specifications 53 described for the respective APIs described in the source code in COBOL as mentioned above. Therefore, no more description is provided in particular.

Next, correspondence between a basic specification corresponding to the requirement specification 51 and the external specification 52 will be discussed.

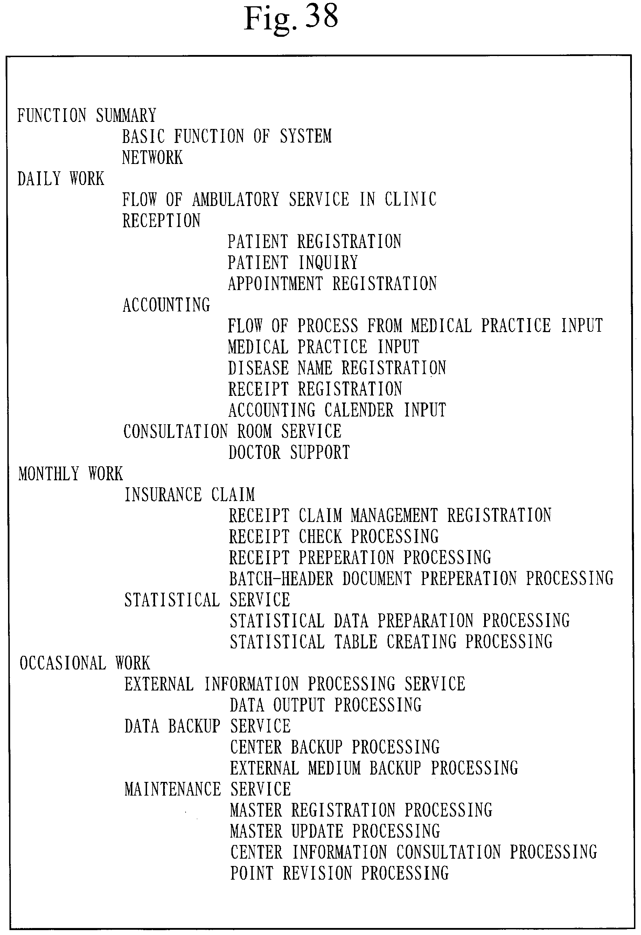

Fig. 38 indicates main items of table of contents of the basic specification.

It is easily recognized that "patient", "appointment" and "disease name", etc. correspond to respective item names in API specification corresponding to the external specification 52 as keywords. Similarly, by the former process 1A, it is possible to determine correspondence between respective areas of the requirement specification 51 and the external specification 52. As is the case with the requirement specification 51-2 as described above, there is a possibility that many-to-many correspondence may be taken.

Points to note are given below. The description parts of system operation environment and network configuration, etc. described in the requirement specification 51 may be eliminated from correspondence with the external specification 52. However, since they are important as description contents, if the description parts are indicated almost commonly in requirement specifications 51 of a plurality of products, the description parts should be adopted as template creation parts of the requirement specifications 51.

In the above, description is provided with a focus on the former process 1A. Although there is no particular design document for the number of a plurality of products also in the case of "Japan Medical Association Standard Receipt Software", it is also possible to apply to the latter process 1B as is the case with the first embodiment.

As described above, the first and second embodiments correspond to the embedded software field; however, as in the third embodiment, it is described that the template creation apparatus 1 can be also applied similarly to the application software field in the medical field.

### Industrial Applicability

The template creation apparatus 1 is described in the example of application to software design. Also in a case of hardware design, implementation by hardware design description language as hardware design data is similar to program implementation of software. Therefore, it is also possible to apply the template creation apparatus 1 to hardware design. Further, if implementation described in description language (data description language, specification description language, architecture description language, system-level description language, etc.) equivalent to a final program exists, it is possible to apply to anything. For example, there are web pages implemented by HTML, XML, Java (registered trademark) script, etc.

### Reference Signs List

1: template creation apparatus; 1A: former process; 1B: latter process; 11: division unit; 12: first keyword extraction unit; 21: source code analysis unit; 22: function list creation unit; 23: second keyword extraction unit; 31a: first correspondence extraction unit; 31b: second correspondence extraction unit; 31c: third correspondence extraction unit; 32: association information creation unit; 33a, 33b, 33c: traceability information acquisition unit; 33d, 33e, 33f: traceability information; 34: interrelation judgment unit; 41: correspondence judgment unit; 41a: count unit; 41b: text analysis unit; 42: importance judgment unit; 43: template output unit; 44: blank creation unit; 51: requirement specification; 51-2: requirement specification; 52: external specification; 53: internal specification; 54: source code; 61-1, 61-2, 61-3: association information; 62-1, 61-2: association information; 63-1, 63-2: association information; 61G-1, 62G-1: area group; 70: template group; 99: processing circuit; 99a: signal line; 901: processor; 902: storage device; 902a: auxiliary storage device; 902b: memory; 903: input IF; 904: output IF; 910: first extraction unit; 920: second extraction unit; 930: creation unit; 940: determination unit

## Claims

1. A template creation apparatus comprising:
a first extraction unit to divide a requirement specification, an external specification and an internal specification of one product all being electronic data into a plurality of areas, and to extract a keyword from each of the plurality of areas;
a second extraction unit to create a function list for each object from source code being electronic data of the one product comprised of a plurality of areas being a plurality of description areas, and to extract a keyword from the function list;
a creation unit to create, for each product, association information indicating correspondence among four areas of an area of the source code, an area of the internal specification, an area of the external specification and an area of the requirement specification, by using the keyword extracted; and
a determination unit to judge whether a plurality of similar area groups exist, in a plurality of products, the plurality of similar area groups being area groups comprised of four areas for which the correspondence is indicated by the association information, and being the area groups similar to one another, of which products are different, and if the plurality of similar area groups exist, to determine whether to adopt four areas of any of the plurality of similar area groups as templates respectively of a requirement specification, an external specification, an internal specification and source code.

2. The template creation apparatus as defined in claim 1, wherein the creation unit, by using the keyword extracted, associates four areas of the area of the source code, the area of the internal specification, the area of the external specification and the area of the requirement specification, by associating the area of the source code with the area of the internal specification, associating the area of the external specification with the area of the internal specification which is associated with the area of the source code, and associating the area of the requirement specification with the area of the external specification which is associated with the area of the source code via the area of the internal specification.

3. The template creation apparatus as defined in claim 1 or claim 2,
wherein the determination unit judges whether the plurality of similar area groups exist, by using an extraction keyword being the keyword included in the area groups of each of the products, and being the keyword extracted by the first extraction unit and the second extraction unit.

4. The template creation apparatus as defined in claim 3,
wherein the determination unit judges whether the plurality of similar area groups exist, by using appearance frequency of the same extraction keyword.

5. The template creation apparatus as defined in claim 1 or claim 2, wherein the determination unit judges whether the plurality of similar area groups exist, by creating a summary of at least any area of the area of the internal specification, the area of the external specification and the area of the requirement specification in the area groups, and comparing the summary.

6. The template creation apparatus as defined in any one of claim 1 through claim 5,
wherein the determination unit determines, based on the number of products for which the plurality of similar area groups being similar to one another exist, adopting four areas of any of the plurality of similar area groups as templates respectively of the requirement specification, the external specification, the internal specification and the source code.

7. A template creation program to make a computer execute:
a process to divide a requirement specification, an external specification and an internal specification of one product all being electronic data into a plurality of areas, and to extract a keyword from each of the plurality of areas;
a process to create a function list for each object from source code being electronic data of the one product comprised of a plurality of areas being a plurality of description areas, and to extract a keyword from the function list;
a process to create, for each product, association information indicating correspondence among four areas of an area of the source code, an area of the internal specification, an area of the external specification and an area of the requirement specification, by using the keyword extracted; and
a process to judge whether a plurality of similar area groups exist, in a plurality of products, the plurality of similar area groups being area groups comprised of four areas for which the correspondence is indicated by the association information, and being the area groups similar to one another, of which products are different, and if the plurality of similar area groups exist, to determine whether to adopt four areas of any of the plurality of similar area groups as templates respectively of a requirement specification, an external specification, an internal specification and source code.

8. A template creation method comprising:
by a computer, dividing a requirement specification, an external specification and an internal specification of one product all being electronic data into a plurality of areas, and extracting a keyword from each of the plurality of areas;
by a computer, creating a function list for each object from source code being electronic data of the one product comprised of a plurality of areas being a plurality of description areas, and extracting a keyword from the function list;
by a computer, creating, for each product, association information indicating correspondence among four areas of an area of the source code, an area of the internal specification, an area of the external specification and an area of the requirement specification, by using the keyword extracted; and
by a computer, judging whether a plurality of similar area groups exist, in a plurality of products, the plurality of similar area groups being area groups comprised of four areas for which the correspondence is indicated by the association information, and being the area groups similar to one another, of which products are different, and if the plurality of similar area groups exist, determining whether to adopt four areas of any of the plurality of similar area groups as templates respectively of a requirement specification, an external specification, an internal specification and source code.
